# EUROPEAN PATENT APPLICATION

(11) **EP 4 716 385 A1**
(43) Date of publication of application: **25.03.2026**
(21) Application number: 25818124.7
(22) Date of filing: 28.03.2025
(51) Int. Cl.: H05K 3/00, G06F 30/392, H05K 13/06, H05K 3/46, G06N 3/08

(54) **METHOD AND SYSTEM FOR GRID-BASED WIRING**

(30) Priority: 14.06.2024 KR 20240077749; 24.12.2024 KR 20240195192
(71) Applicant: LG Management Development Institute Co., Ltd., Seoul 07336 (KR)
(72) Inventor: LEE, Kyung Hyun, Seoul 08831 (KR); LEE, Kang Hoon, Seoul 03504 (KR); PARK, Young Joon, Seoul 07946 (KR); SONG, Hyung Seok, Seoul 07794 (KR); JEONG, Han Seul, Seoul 07576 (KR); YOO, Sung Dong, Seoul 07794 (KR); LIM, Woo Hyung, Seoul 06004 (KR)
(74) Representative: BCKIP Part mbB
(86) International application number: PCT/KR2025/004109
(87) International publication number: WO 2025/258812

(57) **Abstract**

The present invention relates to a method and system for grid-based wiring. More specifically, the present invention relates to a method and system for grid-based wiring capable of performing printed circuit board (PCB) automatic wiring by utilizing combinatorial optimization-based heuristic search.

## Description

### [Technical Field]

The present invention relates to a method and system for grid-based wiring. More specifically, the present invention relates to a method and system for grid-based wiring capable of performing printed circuit board (PCB) automatic wiring by utilizing combinatorial optimization-based heuristic search.

### [Background Art]

The printed circuit board (PCB) is a component essentially included in electronic devices (e.g., a smartphone, a tablet, a PC, etc.), and increases integration and stability by designing lines that connect electronic elements such as resistors and transistors to each other on an epoxy board. The PCB is generally designed in a single-layer or multi-layer structure, and the number of layers may increase according to line density.

In this regard, in a conventional PCB design, a hardware engineer sequentially performs circuit diagram configuration, component disposition, and wiring task (or PCB routing), and a final product is generated by going through such processes multiple times. In this case, as a repetitive modification and review process by the engineer is essential, a large amount of time and cost is consumed in PCB design, and a quality deviation may occur depending on the engineer's proficiency. In addition, in case of complex circuit design, as various constraint conditions need to be satisfied along with a multi-layer structure, the design time and cost are greatly increased.

To solve this, recently, research on technologies that can automatically design PCBs is actively being conducted. However, conventional PCB automatic design technologies have limitations in that a wiring connection success rate is low, and complex constraint conditions (e.g., a wiring forbidden zone, line width and spacing, wiring angle, multi-layer wiring, etc.) cannot be satisfied.

That is, since the wiring task needs to connect thousands of pins in the circuit in consideration of efficiency and various constraint conditions, PCB wiring design is known as the most time-consuming and complex task.

Accordingly, there still exists a need for a technology capable of efficiently performing PCB automatic wiring while satisfying various constraint conditions required for PCB wiring.

### [Disclosure]

### [Technical Problem]

The present invention is directed to providing a method and system for grid-based wiring that is capable of automatically designing a printed circuit board (PCB).

More specifically, the present invention is directed to providing a method and system for grid-based wiring that is capable of automatically designing wiring of a PCB, using artificial intelligence.

Further, the present invention is directed to providing a method and system for grid-based wiring that is capable of efficiently performing PCB automatic wiring while satisfying various constraint conditions required for PCB wiring, based on a grid.

### [Technical Solution]

In a wiring method for a grid-based wiring system according to the present invention for solving the above-described objects, the system may comprise at least one processor and at least one memory including at a computer program code, and the wiring method is performed by cooperation among the computer program code, the memory, and the processor. There is provided a grid-based wiring method according to the present invention. The grid-based wiring method may comprise: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; disposing the plurality of terminals respectively in at least some of the plurality of grid cells, based on the PCB data; exploring a shortest path for wiring the plurality of terminals according to the net list, in a state where the plurality of terminals are disposed in the wiring exploration region; based on a result of wiring the plurality of terminals according to the shortest path, specifying a grid cell that does not satisfy a preset constraint condition, among the plurality of grid cells; updating a cost of the wiring exploration region such that a cost of a specific grid cell that does not satisfy the constraint condition is increased; and re-exploring a shortest path for wiring the plurality of terminals according to the net list in the cost-updated wiring exploration region.

In an embodiment, the plurality of terminals may respectively correspond to electrical contact points where wiring starts or ends on a PCB defined by the PCB data, and the net list may include net group information in which terminals that need to be electrically connected among the plurality of terminals are grouped into respective nets.

In an embodiment, in the exploring of the shortest path, a first shortest path for wiring terminals grouped into a first net defined by the net list, at a minimum cost, and a second shortest path for wiring terminals grouped into a second net different from the first net and defined by the net list, at minimum cost, may be explored.

In an embodiment, in the exploring of the shortest path, the first shortest path and second shortest path having a lowest cost may be explored independently of the constraint condition, in a state where the same cost is given to each of the plurality of grid cells in the wiring exploration region.

In an embodiment, the constraint condition may include a first constraint condition that prevents wiring of the plurality of terminals according to the net list from crossing each other.

In an embodiment, in the specifying of the grid cell that does not satisfy the constraint condition, among the cells occupied by the first shortest path and the cells occupied by the second shortest path, the cells that overlap each other (an overlapping cell) may be specified as a specific grid cell that does not satisfy the constraint condition.

In an embodiment, in the updating of the cost, based on the first constraint condition, during a shortest path re-exploration process of the first net and the second net, the cost of the specific grid cell, which is the overlapping cell, may be set higher than the costs of other grid cells among the plurality of grid cells, so that the specific grid cellis not included in the re-explored shortest path.

In an embodiment, in the re-exploring of the shortest path, the first shortest path of the first net and the second shortest path of the second net may be configured to be re-explored so as to avoid the specific grid cell with increased cost, and the re-explored first shortest path and the re-explored second shortest path may not include the specific grid cell.

In an embodiment, the constraint condition may further comprise a second constraint condition related to at least one of a spacing distance between lines (or wires) of each net included in the net list and a line width of each of the nets.

In an embodiment, the specifying of a grid cell that does not satisfy the constraint condition may further comprise: specifying a second specific grid cell that does not satisfy the second constraint condition in a state where a cost of a first specific grid cell specified according to the first constraint condition has been updated, and in the updating of the cost, a cost of the second specific grid cell may be further increased in a state where the cost of the first specific grid cell has been increased.

In an embodiment, in the specifying of a grid cell that does not satisfy the constraint condition, after specifying one of the re-explored first shortest path and the re-explored second shortest path as a final wiring, a grid cell neighboring the shortest path specified as the final wiring among the plurality of grid cells may be specified as the second specific grid cell that does not satisfy the second constraint condition.

In an embodiment, in the re-exploring of the shortest path, among the re-explored first shortest path and the re-explored second shortest path, a shortest path other than the shortest path specified as the final wiring may be re-explored based on the increased costs of the first specific grid cell and the second specific grid cell.

In an embodiment, the constraint condition may further comprise a third constraint condition related to a wiring forbidden zone in which wiring is restricted in the wiring exploration region.

In an embodiment, the constraint condition may comprise at least one of: a first constraint condition that prevents wiring of the plurality of terminals according to the net list from crossing each other; a second constraint condition related to at least one of a spacing distance between lines of respective nets included in the net list and a line width of each of the nets; or a third constraint condition related to a wiring forbidden zone in which wiring is restricted in the wiring exploration region, and the specifying of the grid cell that does not satisfy the constraint condition may include: specifying at least one specific grid cell that does not satisfy at least one among the first constraint condition, the second constraint condition, and the third constraint condition among the plurality of grid cells.

In an embodiment, in the specifying of a grid cell that does not satisfy the constraint condition, a grid cell according to one of constraint conditions, among the first constraint condition, the second constraint condition, and the third constraint condition, may be preferentially specified according to a preset priority order, and then grid cells according to remaining constraint conditions may be sequentially specified.

In an embodiment, when the PCB defined by the PCB data is composed of a plurality of layers, the wiring exploration region may be formed of a plurality of wiring exploration regions, and the PCB data may comprise position information on which of the plurality of wiring exploration regions each net is to be positioned. In the disposing of each of the plurality of terminals, a cost of at least one of the plurality of wiring exploration regions may be increased based on the position information.

In an embodiment, in the increasing of the cost of at least one of the plurality of wiring exploration regions, when a specific net defined by the net list is to be positioned in a first wiring exploration region among the plurality of wiring exploration regions, costs of grid cells included in remaining wiring exploration regions may be all increased such that the specific net is not disposed in the remaining wiring exploration regions, excluding the first wiring exploration region among the plurality of wiring exploration regions.

In an embodiment, in the disposing of each of the plurality of terminals, the plurality of terminals may be respectively disposed in at least some of the plurality of grid cells, based on the PCB data, in a state where the costs of the remaining wiring exploration regions are increased.

There is provided a grid-based wiring system according to the present invention. The grid-based wiring system may comprise at least one processor and at least one memory including a computer program code, and the memory and the program code may cooperate with the processor to: receive printed circuit board (PCB) data including a net list and information on a plurality of terminals; specify a wiring exploration region for performing wiring for the plurality of terminals based on the net list; perform gridization of the wiring exploration region into a plurality of grid cells based on a preset criterion; dispose the plurality of terminals respectively in at least some of the plurality of grid cells based on the PCB data; explore a shortest path for wiring the plurality of terminals according to the net list with the plurality of terminals disposed in the wiring exploration region; based on a result of wiring the plurality of terminals corresponding to the shortest path, specify a grid cell that does not satisfy a preset constraint condition among the plurality of grid cells; update a cost of the wiring exploration region such that a cost of a specific grid cell that does not satisfy the constraint condition is increased; and re-explore a shortest path for wiring the plurality of terminals according to the net list in the cost-updated wiring exploration region.

There is provided a program stored in a computer-readable recording medium and executed by one or more processes in an electronic device, according to the present invention. The program may comprise instructions to perform: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; disposing the plurality of terminals respectively in at least some of the plurality of grid cells, based on the PCB data; exploring a shortest path for wiring the plurality of terminals according to the net list, in a state where the plurality of terminals are disposed in the wiring exploration region; based on a result of wiring the plurality of terminals according to the shortest path, specifying a grid cell that does not satisfy a preset constraint condition, among the plurality of grid cells; updating a cost of the wiring exploration region such that a cost of a specific grid cell that does not satisfy the constraint condition is increased; and re-exploring a shortest path for wiring the plurality of terminals according to the net list in the cost-updated wiring exploration region.

### [Advantageous Effects]

As described above, according to the method and system for grid-based wiring according to the present invention, by automating the PCB design process using artificial intelligence, it may be possible to minimize the time consumed in the PCB design process, and to enable reduction of human resources and costs incurred in the PCB design process.

In addition, according to the method and system for grid-based wiring according to the present invention, an efficient wiring path satisfying various constraint conditions may be derived by exploring the wiring path of the PCB, using artificial intelligence. Through this, in the present invention, the efficiency, accuracy, and quality of PCB wiring design can be improved simultaneously, and a user can reduce the time and cost incurred to design PCB wiring.

Further, according to the method and system for grid-based wiring according to the present invention, by performing PCB automatic wiring satisfying various constraint conditions required for PCB wiring, using artificial intelligence, the productivity and quality of the entire PCB wiring design process may be improved. That is, the present invention may be flexibly applied and used even in a complex PCB wiring design environment.

In addition, according to the method and system for grid-based wiring according to the present invention, by exploring an efficient PCB wiring path based on a grid, it is possible to derive an optimized wiring path that satisfies complex constraint conditions while minimizing wiring conflicts (or congestion, interference, etc.).

Further, according to the method and system for grid-based wiring according to the present invention, it is possible to explore a wiring path based on a grid and provide an optimized solution to a user based on the explored result. Through this, a user can rid himself of repetitive wiring path adjustment task and maximize the efficiency in the design process.

As such, in the present invention, by performing grid-based exploration to find an optimal path from a start point (terminal) to a target point (terminal), processes such as wiring optimization, path exploration, constraint condition reflection, and the like may be performed efficiently and systematically. The present invention may be applied to the design of various electronic devices, and may be efficiently used in the overall industrial field, and can reduce the cost required in the PCB wiring design process, and minimize the design time and human resources.

### [Description of Drawings]

FIG. 1 is a conceptual diagram for explaining a grid-based wiring system according to the present invention.
FIG. 2 is a conceptual diagram for explaining components included in a PCB and constraint conditions required for PCB design.
FIG. 3 is a conceptual diagram illustrating an embodiment of a multi-layer PCB structure.
FIG. 4 is a flowchart for explaining an overall process of the present invention.
FIG. 5 is a flowchart for explaining a grid-based wiring method according to the present invention.
FIGS. 6, 7, 8, 9, 10, 11, 12, 13, and 14 are conceptual diagrams for explaining the grid-based wiring method according to the present invention.

### [Mode for Disclosure]

Hereinafter, exemplary embodiments disclosed in the present specification will be described in detail with reference to the accompanying drawings. The same or similar constituent elements are assigned with the same reference numerals regardless of reference numerals, and the repetitive description thereof will be omitted. The suffixes "module", "unit", "part", and "portion" used to describe constituent elements in the following description are used together or interchangeably in order to facilitate the description, but the suffixes themselves do not have distinguishable meanings or functions. In addition, in the description of the exemplary embodiment disclosed in the present specification, the specific descriptions of publicly known related technologies will be omitted when it is determined that the specific descriptions may obscure the subject matter of the exemplary embodiment disclosed in the present specification. In addition, it should be interpreted that the accompanying drawings are provided only to allow those skilled in the art to easily understand the embodiments disclosed in the present specification, and the technical teachings disclosed in the present specification is not limited by the accompanying drawings, and includes all alterations, equivalents, and alternatives that are included in the teachings and the technical scope of the present invention.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element exists between the constituent elements.

Singular expressions include plural expressions unless clearly described as different meanings in the context.

In the present application, it should be understood that terms such as "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, components, or a combination thereof in advance.

The present invention relates to a method and system for grid-based wiring (or a method and system for automatic PCB design). A grid-based wiring system (or a PCB automatic design system) according to the present invention may be a system that automatically designs a printed circuit board (PCB) by using artificial intelligence (or an artificial intelligence algorithm) or generative artificial intelligence (generative AI).

In particular, a grid-based wiring system according to the present invention is a system capable of efficiently performing PCB automatic wiring based on a grid while satisfying various constraint conditions required for PCB wiring, and the present invention aims to explore and/or derive (or generate) an optimal wiring path (i.e., solution) that accurately satisfies various constraint conditions.

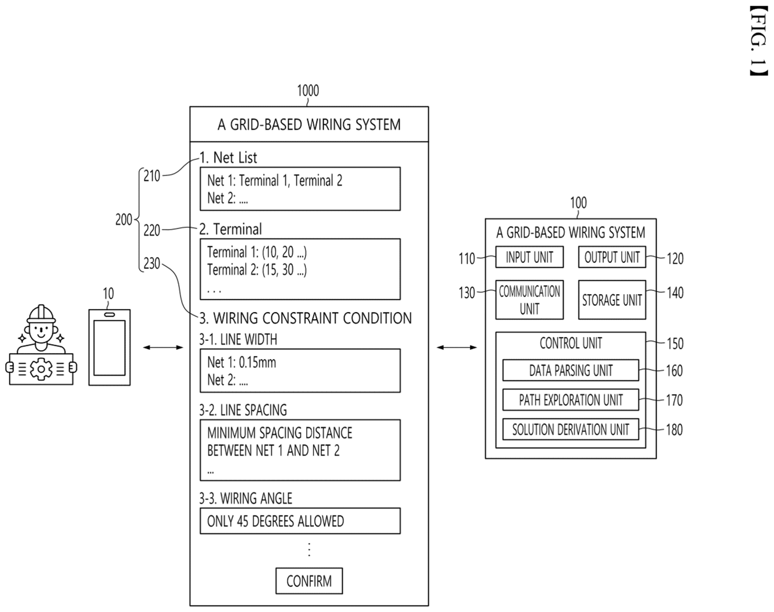

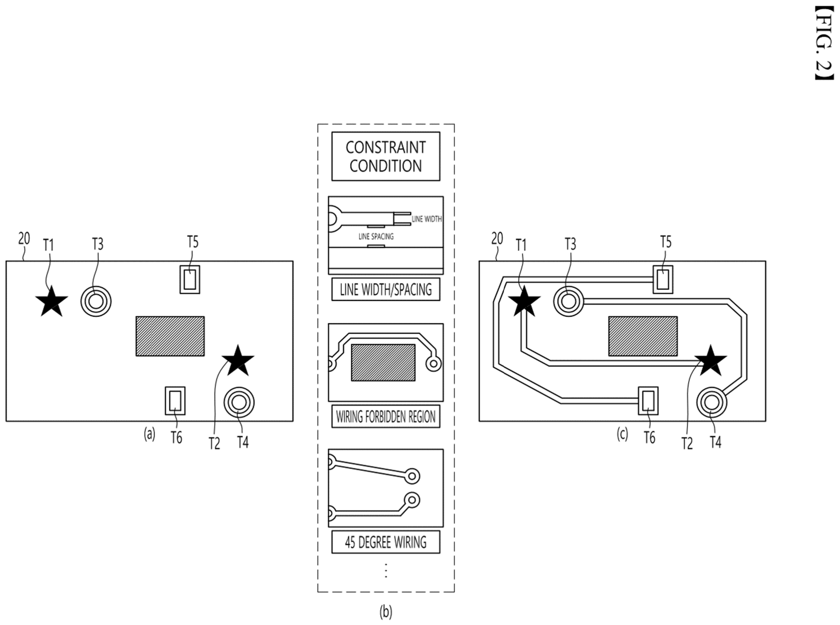

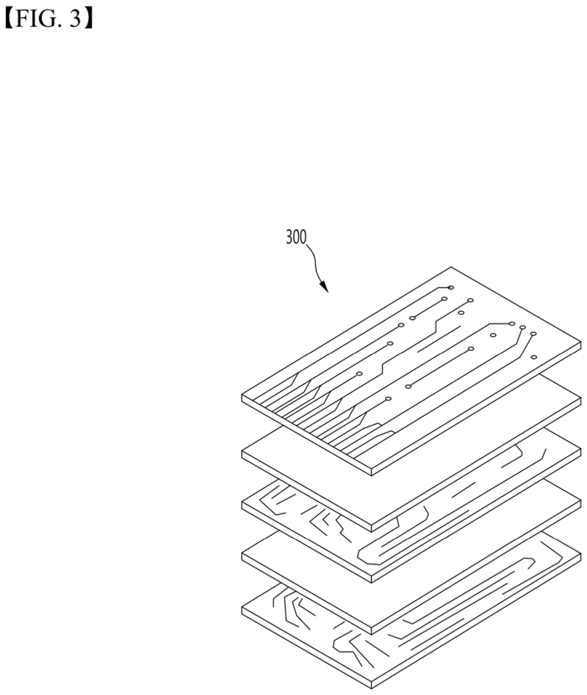

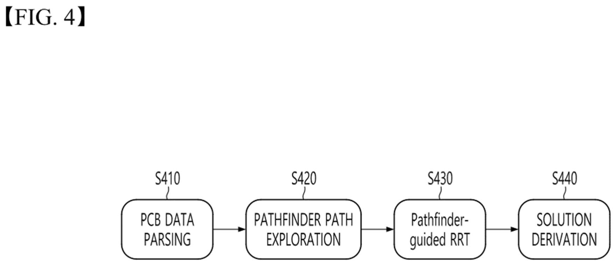

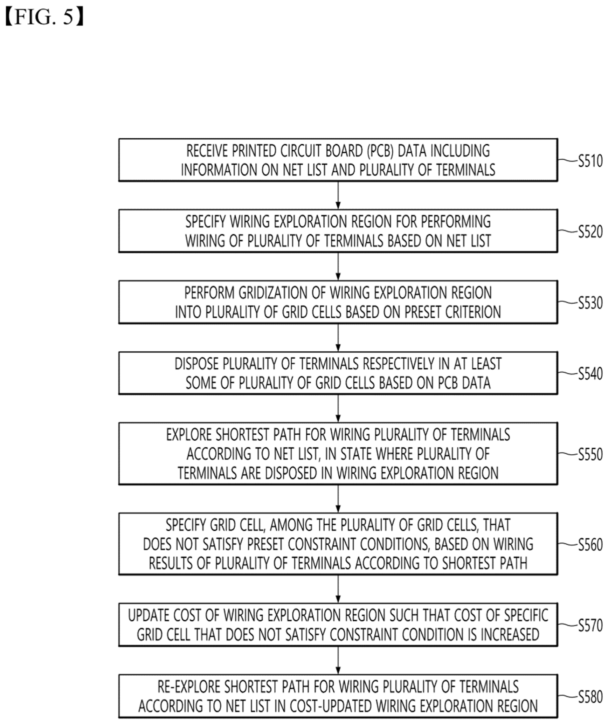

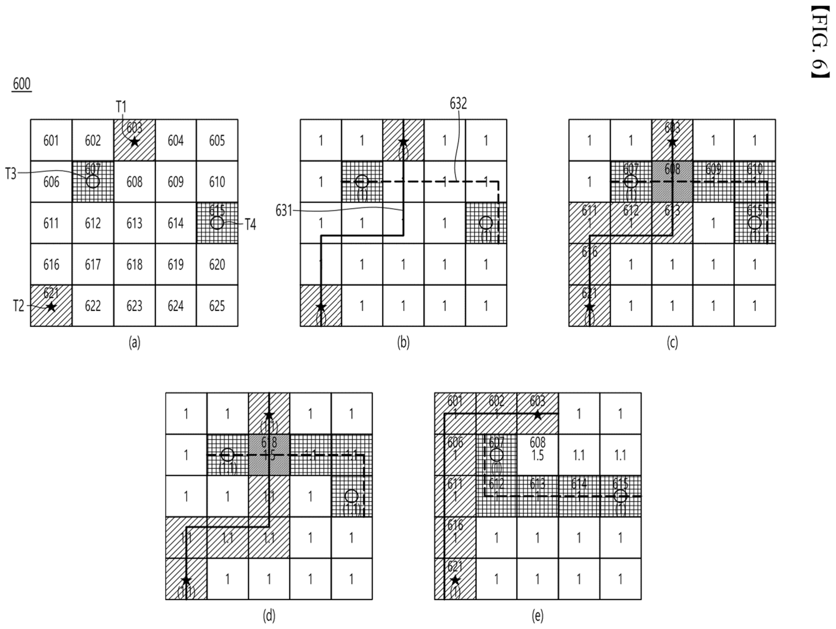

Hereinafter, the present invention will be described in more detail with reference to the accompanying drawings. FIG. 1 is a conceptual diagram for explaining a grid-based wiring system according to the present invention. In addition, FIG. 2 is a conceptual diagram for explaining components included in a PCB and constraint conditions required for PCB design, and FIG. 3 is a conceptual diagram illustrating an embodiment of a multi-layer PCB structure. In addition, FIG. 4 is a flowchart for explaining an overall process of the present invention, and FIG. 5 is a flowchart for explaining a grid-based wiring method according to the present invention. Further, FIGS. 6, 7, 8, 9, 10, 11, 12, 13, and 14 are conceptual diagrams for explaining the grid-based wiring method according to the present invention.

Meanwhile, as illustrated in FIG. 1, a grid-based wiring system 100 according to the present invention may include at least one of an input unit 110, an output unit 120, a communication unit 130, a storage unit 140, or a control unit 150.

The system 100 according to the present invention may include at least one processor and at least one memory including a computer program code. In this case, the storage unit 140 above may serve as the memory. In the present invention, the memory and the program code may cooperate with the processor to perform a series of processes described below.

Although not illustrated, the grid-based wiring system 100 according to the present invention may include one or more processors, and these processors may include one or more general-purpose processors and/or one or more specialized processors (for example, a digital signal processor, a tensor processing unit (TPU), a graphics processing unit (GPU), a neural network processing unit (NPU), an application-specific integrated circuit (ASIC), etc.). The one or more processors may be configured to execute instructions, computer-readable directives, and/or other instructions described in the present specification, which are stored (or included) in the storage unit 140. The grid-based wiring system and method according to the present invention may perform data processing, as described below, with the cooperation of a memory and at least one processor. The processor may perform a series of operations and data processing using data and information stored in the memory. In this case, the memory may be a component of the storage unit 140.

Meanwhile, the input unit 110 may serve as a means for data input, and may be configured in various types. For example, the input unit 110 may be configured to receive a user input. The input unit 110 may be configured to receive user input from the user terminal 10. Here, the phrase "receives input" may mean receiving an input signal (or selection signal) corresponding to user input, based on input being made by a user through an input unit configuration provided in the user terminal 10.

In addition, in the present invention, the input unit 110 does not necessarily refer to a hardware means, but may be understood as a channel for receiving input from a user.

The input unit 110 may also be referred to as a user interface module. The input unit 110 may include a touch screen, computer mouse, keyboard, keypad, touch pad, trackball, joystick, voice recognition module, or other similar devices. However, in the present invention, the types of the input unit 110 are not limited.

Here, the user input may include a document, text, image (or video), voice, and the like. In this case, the grid-based wiring system 100 may further include a module for converting voice into text.

Next, the output unit 120 may output information through an output unit configuration (e.g., a display unit, touch screen, speaker, etc.) provided in a user terminal 10 interoperating with the grid-based wiring system 100 according to the present invention. For example, the output unit 120 may output a page (or service page, 1000) linked with the grid-based wiring system 100 according to the present invention to a display unit of the user terminal 10. In addition, the output unit 120 does not necessarily refer to a hardware means, but may be understood as a channel for outputting results to a user.

Next, the communication unit 130 may be connected to the user terminal 10, a server (e.g., a central server, an external server, etc.), a device, and at least one network, etc. via a wireless or wired network, and may be configured to transmit or receive overall data and information required for the operation of the grid-based wiring system 100 according to the present invention.

Here, the user terminal 10 may include a cell phone, a smart phone, a notebook computer, a portable computer (laptop computer), a slate PC, a tablet PC, an ultrabook, a desktop computer, a digital broadcast terminal, a personal digital assistant (PDA), a portable multimedia player (PMP), a navigation device, a wearable device (e.g., a watch-type device (smartwatch), a glass-type device (smart glass), and a head mounted display (HMD)), and the like.

Further, the communication unit 130 may support various communication methods depending on the communication standards of devices to be communicated with.

For example, the communication unit 130 may be configured to communicate with a communication target using at least one of wireless LAN (WLAN), wireless-fidelity (Wi-Fi), wireless-fidelity (Wi-Fi) direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), fifth generation mobile telecommunication (5G), Bluetooth^{™} radio frequency identification (RFID), infrared communication (infrared data association (IrDA)), ultra-wideband (UWB), ZigBee, near field communication (NFC), Wi-Fi direct, or wireless universal serial bus (wireless USB) technologies.

Next, the storage unit 140 (or a memory), may perform a role of storing various data related to the present invention, and may include one or more non-transitory computer-readable storage media that may be read and/or accessed by at least one of the one or more processors.

The one or more computer-readable storage media may include volatile and/or nonvolatile storage constituent elements, such as optical, magnetic, organic, or other memory or disk storage devices. In some examples, the storage unit 140 may be implemented using a single physical device (e.g., one optical, magnetic, organic, or other memory or disk storage device), whereas in other examples, the storage unit 140 may be implemented using two or more physical devices.

The storage unit 140 may include computer-readable directives and additional data. The storage unit 140 may include a storage necessary to perform at least part of the methods, scenarios, and technologies described in this specification and/or at least part of the functions of the devices and networks.

Further, at least a part of the storage unit 140 may be a cloud storage or a cloud server. At least a part of data corresponding to user input received from the input unit 110 and training data may be stored in the storage unit 140.

That is, the storage unit 140 is sufficient to be a space where information necessary for the operation of the grid-based wiring system 100 according to the present invention is stored, and it may be understood that there are no constraints on physical space.

Further, the storage unit 140 may store a computer program including computer program instructions. Further, the storage unit 140 may store a computer program including computer program instructions that, when loaded to a processor of the system 100, control operation of the system 100 or operation of the control unit. Next, the control unit 150 may perform a role of controlling overall operation of the grid-based wiring system 100 related to the present invention. The control unit 150 may process signals, data, information, and the like that are input or output through the constituent elements of the grid-based wiring system 100 described above, or perform a series of data processing to provide or process appropriate information and functions to the user. The control unit 150 may be physically implemented by the processor described above.

The control unit 150 may include at least one of a data parsing unit 160, a path exploration unit 170, or a solution derivation unit 180, in order to derive an optimal solution (i.e., an optimal wiring path) that satisfies various constraint conditions required for PCB wiring, based on PCB data 200 received (or input) from a user terminal 10 through a service page (or a PCB automatic design program 1000), or based on the PCB data stored in the storage unit 140.

In this case, the control unit 150 may input (or transmit) the PCB data 200, which includes information on at least one of a net list (e.g., "Net list", 210), terminal information (e.g., "Terminal", 220), and various wiring constraint conditions 230, to the data parsing unit 160.

The data parsing unit 160 may be configured to perform various processes (or data processing) such as string parsing, language parsing, Hyper Text Markup Language (HTML) and eXtensible Markup Language (XML) parsing, syntax analyzing (Parsing), and data format parsing.

In an embodiment, string parsing is a process of extracting specific data from a string or converting it into a desired format, and the data parsing unit 160 may parse a Comma-Separated Values (CSV) file to extract table data, or convert a JavaScript Object Notation (JSON) string into an object.

In another embodiment, language parsing may include a process of interpreting source code of a programming language or a markup language, identifying syntax errors, and converting it into executable code. In addition, syntax analyzing may be a process of analyzing a text document in natural language processing to understand sentence structure, vocabulary, grammar, semantics, and the like.

In another embodiment, data format parsing may be a process of analyzing a specific data format (e.g., XML, JSON, Yet Another Markup Language (YAML), etc.) to extract and process data, and such formats may be used for data exchange and storage, and may play an important role in sharing data between applications.

Such a data parsing unit 160 may analyze (or interpret) the PCB data (or PCB design data 200), and may extract at least one of the net list 210, terminal information 220, and wiring constraint condition(s) 230 included in the PCB data 200, based on the analysis result. For example, the data parsing unit 160 may analyze the PCB data 200, and extract at least one of net group information, coordinate information (or position information, coordinate values, etc.) for each of a plurality of terminals, or wiring constraint conditions.

Further, the data parsing unit 160 may convert information (or data) extracted from the PCB data 200 into a form (or data structure) understandable by an artificial intelligence model (or algorithm).

In an embodiment, the data parsing unit 160 may convert coordinate information (e.g., Cartesian coordinates) for a plurality of terminals included in the PCB data 200 into grid (lattice-based) coordinate information.

In another embodiment, the data parsing unit 160 may parse data from PCB design data (e.g., Gerber, ODB, CAD files, etc.), and may input (or transmit) the parsed data to at least one of the control unit 150, the path exploration unit 170, or the generative model (not illustrated).

Hereinafter, the information included in the PCB data 200 and constraint conditions required for PCB design will be described in more detail.

First, as illustrated in (a) of FIG. 2, a plurality of terminals T1, T2, T3, T4, T5, and T6 may mean electrical connection points (pins or nodes of electronic components) at which wiring is to be actually performed. Here, the term "electrical connection point" may mean an electrical contact point (start point or end point) at which wiring starts or ends, and a terminal may mean an electrical contact point at which wiring starts or ends.

Such terminals are points at which electronic components, such as resistors or transistors, are mounted on a PCB 20, and a terminal may be expressed as a component pin or an electrical node on the PCB 20. For example, a specific pin of an integrated circuit (IC) chip, a contact point of a connector, or an end point of a PCB (or circuit) trace, or the like may correspond to a terminal.

That is, the plurality of terminals T1, T2, T3, T4, T5, and T6 may respectively correspond to electrical contact points at which wiring starts or ends on the PCB 20 defined by the PCB data 200. In this case, the PCB data 200 may include coordinate information for each of the plurality of terminals T1, T2, T3, T4, T5, and T6 (e.g., "Terminal 1: (10, 20 ...)", "Terminal 2: (15, 30 ...)", etc.). In this case, when the PCB to be designed has a multi-layer structure, the PCB data 200 may further include information on the layer on which each terminal is positioned.

Here, an electrical contact point may refer to a physical or logical contact point (node) at which electrical signals are delivered or connections are made. This may operate as a connection point for delivering current, signals, or data in electronic device and circuit design.

A physical contact point may correspond to a physical connection point at which current actually flows or electrical signals are delivered. For example, the physical contact point may include a point at which pins and sockets of a connector touch, a portion where contact occurs in a relay or switch, a soldered pin on a PCB, or the like.

In addition, a logical contact point (node) may correspond to a point that is not physically connected but is regarded as being electrically connected. For example, the logical contact point may include a node connected by a net in circuit design, a terminal on a path through which an electrical signal moves from one node to another node, or the like.

Such electrical contact points (nodes) may perform a role of forming a path along which electrical signals move to other components or circuits in the circuit. For example, the electrical contact points may i) allow current to be delivered to an electronic device through a contact point, ii) allow power to be supplied at a contact point of battery terminals (anode and cathode), iii) provide a physical connection between electronic components so that signals or power may flow, or iv) perform a role of connecting a pin of an IC chip to a trace in PCB design.

Next, a net ("Net") may mean a path that needs to be essentially connected to deliver signals or supply power in a circuit, and may refer to a group of terminals (electrical contact points) that need to be electrically connected or exchange signals with each other. For example, when a first terminal T1 and a second terminal T2 are to be connected by wiring, the first terminal T1 and the second terminal T2 may be understood as belonging to the same net (e.g., Net 1).

The net list 210 may include a list (or set) of terminals that are to be electrically connected. More specifically, the net list 210 may include information defining connection relationships among terminals that are to be electrically connected. Terminals defined in the net list 210 may be key nodes that are to be electrically connected on the PCB 20. For example, a user (or engineer) may perform grouping of terminals T1 and T2, which are to be electrically connected, among the plurality of terminals T1, T2, T3, T4, T5, and T6, into a single net (e.g., "Net 1"), and may input the grouped net group information (e.g., "Net 1: Terminal 1, Terminal 2") into the net list 210. In this case, the "Net 1: Terminal 1, Terminal 2" input into the net list 210 may be interpreted to mean that the first terminal T1 is to be connected to the second terminal T2.

Accordingly, the net list 210 included in the PCB data 200 may include net group information in which terminals, among the plurality of terminals T1, T2, T3, T4, T5, and T6, that are to be electrically connected are grouped into respective nets.

For example, in the net list 210, a first net group information (e.g., "Net 1: Terminal 1, Terminal 2") may be included, in which the first terminal T1 and the second terminal T2 are included in a group called a first net (e.g., Net 1), and it is defined (or represented) that the first terminal T1 and the second terminal T2 are to be electrically connected.

In another example, a second net group information (e.g., "Net 2: Terminal 3, Terminal 4") may be included in the net list 210, in which a third terminal T3 and a fourth terminal T4 are included in a group called a second net (e.g., Net 2), and it is defined that the third terminal T3 and the fourth terminal T4 are to be electrically connected.

That is, the net group information included in the net list 210 may be understood as information including which terminals are grouped into a single net, and what connections are to be made among the terminals included in each net.

Therefore, according to the net group information included in the net list 210, terminals belonging to (or included in) the same net (e.g., Net 1) need to be connected to each other, and terminals belonging to different nets (e.g., Net 1 and Net 2) should not be connected to each other.

Next, wiring constraint conditions 230 are conditions that need to be followed in PCB wiring, and may include various conditions that are essential to ensure performance and reliability of the circuit. For example, as illustrated in (b) of FIG. 2, the wiring constraint conditions may include at least one of i) a line width, ii) a line spacing, iii) a wiring forbidden region (or zone), iv) 45-degree wiring, or v) a line length constraint. In the present invention, such constraint conditions may also be referred to as a "preset constraint condition(s)" in the sampling-based system.

The line width may mean a thickness (or width) of a line. For example, it is necessary to maintain a consistent line width in order to allow current to flow safely in a PCB.

The line spacing may mean a minimum distance to be maintained between different nets (lines, wires, wiring, etc.). For example, when the spacing between lines is too narrow, signal interference or short circuiting may occur. Therefore, it is necessary to maintain a safe distance (or minimum distance) between different lines to prevent such issues.

The wiring forbidden region may mean a region where wiring cannot be disposed (or connected) (i.e., a region where wiring cannot be drawn). For example, when a specific region is where an electronic component is to be mounted, or where electromagnetic shielding or other important constraints exist, the specific region may be set as a wiring forbidden region.

The 45-degree wiring may mean a constraint to make wiring connections at an angle of 45 degrees, not a right angle (90 degrees). For example, the 45-degree wiring is for reducing signal reflection and for allowing signals to be delivered smoothly, and particularly, in case of high-speed signals or sensitive signals, the wiring may be designed (or connected) at an angle of 45 degrees.

A line length constraint may mean a constraint that limits the maximum length of a path connecting terminals. This is very important in high-frequency devices, since when a signal propagates along a lengthy wiring, the amplitude of the signal decreases, and simultaneously, noise is amplified, resulting in degradation of circuit performance.

Meanwhile, a goal of PCB automatic design is to connect all terminals T1, T2, T3, T4, T5, and T6 included in the net list 210 while satisfying all of the constraint conditions described above (see (c) of FIG. 2).

More specifically, all terminals (connection points) included in the net list 210 need to be electrically connected to each other. For example, according to the net list 210 included in the PCB data 200, the first terminal T1 and the second terminal T2 belonging to a first net (or net group information) must be connected to each other, and the third terminal T3 and the fourth terminal T4 belonging to a second net must be connected to each other.

In this case, when a plurality of terminals are connected to each other according to the net list 210, the wiring connecting the terminals need to be designed (or connected) to satisfy all of the constraint conditions. For example, wiring connecting the first terminal T1 and the second terminal T2, and wiring connecting the third terminal T3 and the fourth terminal T4, need to be designed to satisfy all of the various constraint conditions without conflicting with each other.

As such, in PCB design task, wiring task is the most complex problem, and the PCB wiring problem may be viewed as a combinatorial optimization problem such as a rectilinear Steiner tree packing problem (RSTPP). Here, a Steiner tree may mean a tree that connects multiple (or plural) terminals, and packing may mean placing multiple Steiner trees in the same space. The goal of the PCB wiring problem may be to minimize the cost (or expense) of all Steiner trees. That is, the Steiner tree packing problem may be defined as a problem of finding an optimal combination in a limited space while minimizing paths connecting multiple connection points (terminals).

Here, combinatorial optimization may be a branch of optimization, and may be a field of finding a solution satisfying an optimal objective value from a finite set of discrete solution candidates. For example, one of the combinatorial optimization problems is the traveling salesman problem (TSP), in which, when the locations of cities to be visited by a salesman are fixed, the traveling salesman has a problem in that the order of visiting the cities needs to be determined such that the total travel distance is minimized while visiting each city exactly once. In this case, the objective value of the traveling salesman problem may be the total travel distance between the cities.

PCB design may also be viewed as one type of combinatorial optimization problem. In this case, the goal of the present invention is to derive a structure in which lines of components are disposed most efficiently without conflicting with each other. In addition, in the present invention, because the actual PCB design problem may be regarded as a Steiner tree problem to which various constraint conditions are added, it may also be referred to as "a constraint condition-added (or a constrained) Steiner tree packing problem."

In this regard, characteristics of the PCB problem may include at least one of path planning (or exploration), trajectory-based multi-agent planning, and multi-layer planning.

Path exploration may mean a task of exploring an optimal path in PCB wiring. For example, while, in wiring, a shortest path between terminals (connection points) needs to be found, when a wiring of another net already exists, it needs to be bypassed (or avoided) to be connected. Therefore, depending on the existing wiring situation, a bypassing and inefficient path compared to an initially intended shortest path may have to be selected.

The trajectory-based multi-agent planning may refer to planning paths such that each net (path) does not overlap others when the wiring is composed of multiple nets in PCB design. For example, during the wiring process, it is necessary to avoid all the paths of other nets that have already been wired, and this may be similar to the problem in which multiple robots move while avoiding each other's paths. However, in the multi-robot path exploration problem, only the current positions are avoided, whereas in PCB design, there is a difference in that the entire paths that have already been wired need to be considered. That is, the trajectory-based multi-agent planning may have the goal of ensuring that all lines are connected independently while preventing conflicts.

The multi-layer planning may mean that the PCB has a multi-layer structure, and vias may be used (or utilized, applied, etc.) for interlayer movement. For example, as illustrated in FIG. 3, the multi-layer structure may refer to the PCB 300 being divided into a plurality of layers (or multiple layers). In the multi-layer structure PCB 300, when a conflict between lines occurs in a specific layer, the wiring may be moved to another layer to be connected. Here, a via is a hole that connects between a plurality of layers (e.g., two layers) of the PCB 300, and since a via occupies a large amount of space, excessive use of vias may lead to a shortage of wiring space. That is, the via used for interlayer movement has a larger area than general wiring, and thus needs to be used carefully.

With reference back to FIG. 1, the path exploration unit 170 may be configured to perform a role of exploring an optimal (or optimized) wiring path that satisfies various constraint conditions. The path exploration unit 170 may perform the role of deriving a wiring path similar to an actual design while satisfying the constraint condition, by using an algorithm (e.g., shortest path exploration algorithm, combinatorial optimization algorithm, etc.) trained with wiring data of a PCB of which design is completed as training data.

In the present invention, in the path exploration process for PCB automatic wiring, at least one algorithm, an artificial neural network, or a generative model (e.g., a diffusion model) may be utilized (or used). In one embodiment, the control unit 150 may perform reinforcement learning (RL) or supervised learning (SL) for a generative model, with wiring data of a PCB of which actual design is completed as training data. The trained generative model may understand complex patterns and design rules of PCB wiring, and may output a result similar to an actual PCB design while satisfying the wiring constraint conditions. In addition, the generative model may be a generative model trained based on data, using a deep learning-based combinatorial optimization algorithm.

Further, in the present invention, algorithms used to explore an optimal wiring path (or to explore a shortest path) based on a grid may variously exist. For example, a Pathfinder algorithm, a Dijkstra's algorithm, an A algorithm, a Lee algorithm, a heuristic algorithm, a RankingCost algorithm, and the like may be included in such algorithms. However, the types of algorithms used (or applied) in the present invention are not necessarily limited thereto, and any algorithm related to shortest path exploration or combinatorial optimization may be used.

Meanwhile, the control unit 150 may specify a wiring exploration region for performing wiring for the plurality of terminals T1, T2, T3, T4, T5, and T6 based on the net list 210 included in the PCB data 200, and may perform gridization of the wiring exploration region by dividing such into a plurality of grid cells based on a preset criterion.

Further, the control unit 150 may respectively dispose the plurality of terminals T1, T2, T3, T4, T5, and T6 in at least some of the plurality of grid cells based on the PCB data 200, and may perform a path exploration process (or procedure) for wiring the plurality of terminals T1, T2, T3, T4, T5, and T6, using the path exploration unit 170.

The path exploration unit 170 may explore a shortest path for wiring the plurality of terminals T1, T2, T3, T4, T5, and T6 according to the net list 210 in a state in which the plurality of terminals T1, T2, T3, T4, T5, and T6 are disposed in the wiring exploration region. In this case, the path exploration unit 170 may specify a grid cell, among the plurality of grid cells, that does not satisfy a preset constraint condition based on a result of wiring the plurality of terminals according to the shortest path, and may update the cost of the wiring exploration region such that the cost of the specified grid cell is increased. Further, the path exploration unit 170 may re-explore a shortest path for wiring the plurality of terminals T1, T2, T3, T4, T5, and T6 according to the net list 210 in the cost-updated wiring exploration region. The further details will be described below.

Next, the solution derivation unit 180 may be configured to perform the role of deriving (or generating, extracting, etc.) a solution that satisfies constraint conditions in the grid, based on a result explored by the path exploration unit 170. As described above, a process of exploring a path while updating costs may be repeatedly performed by the path exploration unit 170 until each signal (e.g., wiring, net, etc.) satisfies a preset constraint condition. In this case, the solution derivation unit 180 may derive an optimal solution (i.e., a shortest path that satisfies constraint conditions while wiring terminals belonging to a specific net at a minimum cost) that satisfies constraint conditions on the grid, based on a result of performing a path exploration process of the path exploration unit 170.

However, in the present invention, the processes performed in the data parsing unit 160, the path exploration unit 170, and the solution derivation unit 180 may be configured in such a manner as to be performed even by the control unit 150 or a generative model (not illustrated). Hereinafter, for convenience of explanation, the above-described cases will be described without being distinguished.

Meanwhile, the present invention is directed to providing a method and system for grid-based wiring capable of automatically designing a printed circuit board (PCB), using artificial intelligence. More specifically, the present invention is directed to providing a method and system for grid-based wiring capable of efficiently performing PCB automatic wiring while satisfying various constraint conditions required for PCB wiring. Hereinafter, a grid-based wiring method will be described more specifically.

First, in the present invention, a process of receiving printed circuit board (PCB) data including information on a net list and a plurality of terminals may be performed (S510, see FIG. 5).

The grid-based wiring system 100 according to the present invention may be implemented in various forms such as an application, software, web-site, and program. However, in this specification, for convenience of explanation, the form in which the grid-based wiring system 100 is implemented is not limited to any one form.

The control unit 150 may receive PCB data from the user terminal 10. For example, as illustrated in FIG. 1, the control unit 150 may provide a service page 1000 linked with the grid-based wiring system 100 to the user terminal 10. In addition, the control unit 150, in order to receive a user input for PCB data, may provide a graphical object (e.g., "Confirm") linked with a PCB data reception function in a region of the service page 1000. The control unit 150 may receive PCB data 200 input from the user terminal 10, based on the graphical object (e.g., "Confirm") being selected from the user terminal 10.

The PCB data 200 may include at least one of a net list (e.g., "Net list", 210), terminal information (e.g., "Terminal", 220), or a constraint condition 230. Here, the constraint condition(s) 230 may also be understood as a preset constraint condition(s).

The control unit 150 may store the received PCB data 200 in a storage unit 140 (or memory), and may input (or transmit) the stored PCB data 200 to the data parsing unit 160.

The data parsing unit 160, through a PCB data parsing process, may analyze the PCB data 200, and may extract information necessary for PCB automatic design from the PCB data 200 (S410, see FIG. 4).

More specifically, the data parsing unit 160 may analyze (or interpret) the PCB data 200, and may extract at least one of the net list 210, terminal information 220, or wiring constraint condition(s) 230 included in the PCB data 200, based on the analysis result. For example, the data parsing unit 160 may analyze the PCB data 200, and may extract at least one of net group information, coordinate information (or position information, coordinate values, etc.) for each of the plurality of terminals T1, T2, T3, T4, T5, and T6, or wiring constraint condition(s).

Further, the control unit 150 may store, in the storage unit 140, information extracted from PCB data 200 through the data parsing unit 160.

Next, in the present invention, a process of specifying a wiring exploration region for performing wiring of a plurality of terminals based on a net list may be performed (S520), and a process of performing gridization of the wiring exploration region into a plurality of grid cells based on a preset criterion may be performed (S530, see FIG. 5).

The control unit 150 may specify a wiring exploration region for performing wiring of the plurality of terminals T1, T2, T3, T4, T5, and T6, based on the net list 210 stored in the storage unit 140.

Here, the wiring exploration region may mean a path exploration range or region in which wiring may be performed. This may also be understood as a region in which wiring is possible in PCB design.

Specifically, the control unit 150 may plan wiring of the plurality of terminals T1, T2, T3, T4, T5, and T6 based on connection relationships defined in the net list 210. The control unit 150 may determine, based on the net list 210, which terminals among the plurality of terminals T1, T2, T3, T4, T5, and T6 are to be wired. For example, it is assumed that the net list 210 includes a first net group information (e.g., "Net 1: Terminal 1, Terminal 2") defining that the first terminal T1 and the second terminal T2 need to be electrically connected, a second net group information (e.g., "Net 2: Terminal 3, Terminal 4") defining that the third terminal T3 and the fourth terminal T4 need to be electrically connected, and a third net group information (e.g., "Net 3: Terminal 5, Terminal 6") defining that the fifth terminal T5 and the sixth terminal T6 need to be electrically connected. The control unit 150 may specify a wiring exploration region for performing wiring of the plurality of terminals T1, T2, T3, T4, T5, and T6, based on the net group information included in the net list 210.

When the wiring exploration region is specified, the control unit 150 may divide the specified wiring exploration region into grid units and may perform gridization.

The gridization may be a task of dividing a space into grid units, performing discretization, and expressing each unit as explorable nodes and connection structures. For example, the grid unit may refer to a square or rectangular cell on a two-dimensional plane, in which the crossing points of respective grids become nodes, and lines connecting grids may serve as edges.

The gridization in the present invention is dividing the wiring exploration region into grid units and expressing it as structured data, and may be understood as a step for constructing an environment in which a generative model (or artificial intelligence algorithm) may efficiently explore a path.

In the present invention, a step of performing gridization may include a process (or step) of generating a grid-based data structure by dividing a specified wiring exploration region into discrete grid units according to a preset criterion, or a process of performing gridization of the wiring exploration region by dividing it into rows and columns according to a preset grid size.

Specifically, as illustrated in (a) of FIG. 6, the control unit 150 may perform gridization of a specified wiring exploration region 600 into a plurality of grid cells 601 to 625 based on a preset criterion. Here, the grid cell may mean a division of the wiring exploration region 600 into small unit cells through discretization. In this case, the preset criterion may be set based on at least one of grid size (or dimension, e.g., 1mm x 1mm or 8 x 8, etc.) or unit spacing.

In an embodiment, in the present invention, the grid size may be set based on a range reachable through a plurality of grid cells (e.g., four cells) to a terminal that exists at the closest position, using the corresponding terminal as a reference. In the present invention, when the closest terminal exists, the grid size or distribution may be determined (or set) by considering the range reachable through movement between the plurality of grid cells to the terminal. This may also be understood as being determined in the PCB data parsing process performed through the data parsing unit 160.

However, it is obvious that a predetermined criterion or a grid size (or lattice size) is not necessarily limited only to the mentioned examples, and may be variously changed by a user or the grid-based wiring system 100.

Further, in the present invention, based on PCB data, a process of disposing the plurality of terminals, respectively, in at least some of the plurality of grid cells may be performed (S540, see FIG. 5).

The control unit 150 may dispose, respectively, the plurality of terminals T1, T2, T3, T4, T5, and T6 in one of the plurality of grid cells 601 to 625 included in the grid.

Specifically, the control unit 150 may dispose, respectively, the plurality of terminals T1, T2, T3, T4, T5, and T6 in at least some of the plurality of grid cells 601 to 625, based on the PCB data 200 stored in the storage unit 140.

As described above, the PCB data 200 may include at least one of net group information, position information for each of the plurality of terminals T1, T2, T3, T4, T5, and T6, or a constraint condition(s).

In this case, the control unit 150, based on the position information for each of the plurality of terminals T1, T2, T3, T4, T5, and T6, may specify (or determine, select, etc.) grid cells in which each terminal may be positioned among the plurality of grid cells 601 to 625.

For example, the control unit 150 may determine grid cells in which the first terminal T1 and the second terminal T2, belonging to a first net, may be respectively disposed, among the plurality of grid cells 601 to 625. The control unit 150, based on the position information for each of the first terminal T1 and the second terminal T2, may determine the grid cell in which the first terminal T1 may be disposed as a first grid cell 603, and may determine the grid cell in which the second terminal T2 may be disposed as a second grid cell 621.

In another example, the control unit 150 may determine grid cells in which the third terminal T3 and the fourth terminal T4, which belong to the second net, may be respectively disposed, among the plurality of grid cells 601 to 625. The control unit 150, based on the position information for each of the third terminal T3 and the fourth terminal T4, may determine the grid cell in which the third terminal T3 may be disposed as a third grid cell 607, and may determine the grid cell in which the fourth terminal T4 may be disposed as a fourth grid cell 615.

Further, the control unit 150, based on the grid cells 603, 621, 607, and 615 in which each of the plurality of terminals T1, T2, T3, T4, T5, and T6 may be positioned being specified, may respectively dispose each of the plurality of terminals T1, T2, T3, T4, T5, and T6 in each of the specified grid cells 603, 621, 607, and 615.

For example, the control unit 150, according to the net list 210, may dispose the first terminal T1, which belongs to the first net, in the first grid cell 603, and may dispose the second terminal T2, which is to be electrically connected to the first terminal T1, in the second grid cell 621. In this case, the first terminal T1 may be understood as the point (i.e., start point, departure point, etc.) at which wiring starts, and the second terminal T2 may be understood as the point (i.e., end point, target point, etc.) at which the wiring, starting from the first terminal T1, is finally connected.

In another example, the control unit 150, according to the net list 210, may dispose the third terminal T3, which belongs to the second net, in the third grid cell 607, and may dispose the fourth terminal T4, which is to be electrically connected to the third terminal T3, in the fourth grid cell 615. In this case, the third terminal T3 may be understood as the point at which wiring starts, and the fourth terminal T4 may be understood as the point at which the wiring, starting from the third terminal T3, is finally connected.

That is, the control unit 150, based on the net list 210 included in the PCB data 200, may respectively dispose the terminals to be electrically connected in the respective specific grid cells. As such, in the present invention, the terminals are disposed in the grid cells, and thereafter may be used as a departure point and a target point in the wiring exploration process.

Meanwhile, in the present invention, a process of exploring a shortest path for wiring a plurality of terminals according to a net list, in a state where the plurality of terminals are disposed in the wiring exploration region, may be performed (S550, FIG. 5).

In the present invention, based on a grid generated based on PCB data, a shortest path for wiring a plurality of terminals may be explored (S420, FIG. 4). In this case, the path exploration unit 170 may detect a region that violates the constraint condition(s), using an algorithm (shortest path exploration algorithm) trained on various PCB wiring data of which actual design is completed, and may perform re-exploration by giving (or imposing) a penalty to a conflict region.

More specifically, the path exploration unit 170 may determine whether the constraint condition(s) is satisfied among the paths explored for each net, and may increase a cost at a grid point where a constraint condition occurs, to bypass the corresponding point in a next iteration process. By repeating such a process multiple times, the path may ultimately converge to a path satisfying the constraint condition(s).

Here, the cost may refer to a cost function, which is a weight assigned (or given) to each of a plurality of grid cells included in the grid, or to a path, in order to optimize a wiring path, used for exploring a path, evaluating the efficiency of a specific path, and satisfying the constraint condition.

That is, the path exploration unit 170 may i) give a penalty to a corresponding region when each wire violates a constraint condition, and ii) repeat a process of performing re-wiring while avoiding the region where the penalty is given, to derive a wiring result (or solution) that satisfies all of the constraint conditions. In this case, the path exploration unit 170 may be configured to explore a shortest path for PCB wiring in consideration (or reflection) of various industrial requirements (e.g., maintaining spacing between PCB wiring, distances between component pads and wiring, adjusting the number of vertical vias (holes for electrical connection) between PCB layers, etc.).

The control unit 150 may explore a shortest path for wiring the plurality of terminals T1, T2, T3, T4, T5, and T6, using the path exploration unit 170, in a state in which the plurality of terminals T1, T2, T3, T4, T5, and T6 are disposed in the wiring exploration region 600.

The path exploration unit 170 may explore a shortest path for wiring the plurality of terminals T1, T2, T3, T4, T5, and T6 according to the net list 210. More specifically, the path exploration unit 170 may explore a shortest path for wiring the terminals grouped into the same net. In this case, in the present invention, the shortest path exploration step (or process) may include an initial shortest path exploration step and a shortest path exploration step through re-exploration.

First, as illustrated in (b) of FIG. 6, in the initial shortest path exploration step, the path exploration unit 170 may give the same cost (e.g., "1") to each of the plurality of grid cells 601 to 625 in the wiring exploration region 600.

Further, in a state in which the same cost is given to each of the plurality of grid cells 601 to 625 in the wiring exploration region 600, the path exploration unit 170 may explore a shortest path for wiring the terminals grouped into each net defined by the net list, at a minimum cost.

In this case, in the initial shortest path exploration step, the path exploration unit 170 may explore a shortest path having the lowest cost, independently of the constraint condition. In the initial shortest path exploration step, even if there is a conflict (congestion or overlap) between shortest paths connecting terminals grouped into different nets, the shortest path in which the sum of costs of the path connecting the terminals has the lowest value, may be explored.

That is, the path exploration unit 170 may explore a shortest path having the lowest cost, independently of the constraint condition(s), in a plurality of grid cells (or cost map) to which costs are given. Here, the constraint condition(s) may include a first constraint condition for preventing the wiring of the plurality of terminals T1, T2, T3, T4, T5, and T6 according to the net list 210 from crossing each other.

In an embodiment, the path exploration unit 170 may explore a first shortest path for wiring the first terminal T1 and the second terminal T2, which are grouped into the first net defined by the net list, at a minimum cost. In this case, the path exploration unit 170 may explore the first shortest path having the lowest value (e.g., "7") of the sum of costs of the path (or net) connecting the first terminal T1 corresponding to a start point and the second terminal T2 corresponding to a target point, without considering the constraint condition(s).

In another embodiment, the path exploration unit 170 may explore a second shortest path for wiring the third terminal T3 and the fourth terminal T4, which are grouped into the second net defined by the net list, at a minimum cost. In this case, the path exploration unit 170 may explore the second shortest path having the lowest value (e.g., "5") of the sum of costs of the path (or net) connecting the third terminal T3 corresponding to a start point and the fourth terminal T4 corresponding to a target point, without considering the constraint condition(s).

Further, the path exploration unit 170 may wire the plurality of terminals based on the explored shortest path.

More specifically, the path exploration unit 170 may wire the terminals grouped into each net, according to the shortest path explored in the initial shortest path exploration step.

For example, as illustrated in (b) of FIG. 6, the path exploration unit 170 may wire the first terminal T1 and the second terminal T2 on the grid cells 603, 608, 611, 612, 613, 616, and 621 corresponding to (or applicable to) the first shortest path, according to the first shortest path.

In another example, the path exploration unit 170 may wire the third terminal T3 and the fourth terminal T4 on the grid cells 607, 608, 609, 610, and 615 corresponding to the second shortest path, according to the second shortest path.

Meanwhile, in the present invention, a process of specifying a grid cell that does not satisfy a preset constraint condition among the plurality of grid cells, based on a result of wiring the plurality of terminals according to the shortest path, may be performed (S560, see FIG. 5).

The path exploration unit 170 may specify a wiring that does not satisfy the preset constraint condition among the lines connecting the plurality of terminals, based on a result of wiring the plurality of terminals according to the shortest path.

Specifically, the path exploration unit 170 may specify a grid cell that does not satisfy the constraint condition(s) among the grid cells 603, 608, 611, 612, 613, 616, and 621 occupied by the first shortest path, and the grid cells 607, 608, 609, 610, and 615 occupied by the second shortest path.

With reference to (b) of FIG. 6, the wiring 631 connecting the first terminal T1 and the second terminal T2, and the wiring 632 connecting the third terminal T3 and the fourth terminal T4, may cross each other and may not satisfy the constraint condition (first constraint condition). This may be because the shortest path is explored based on the lowest cost value independently of the constraint condition(s), and therefore, a crossing may occur between the first wiring 631 according to the first shortest path and the second wiring 632 according to the second shortest path.

The path exploration unit 170 may specify a grid cell that does not satisfy the preset constraint condition among the plurality of grid cells 601 to 625. As illustrated in (c) of FIG. 6, the path exploration unit 170 may analyze the grid cells 603, 608, 611, 612, 613, 616, and 621 occupied by the first shortest path and the grid cells 607, 608, 609, 610, and 615 occupied by the second shortest path, and based on the analysis result, may specify a specific grid cell 608 that does not satisfy the first constraint condition.

Here, the specific grid cell 608 may be a point (or zone) where the first wiring 631 and the second wiring 632 cross (or conflict with) each other, and may correspond to a point that does not satisfy the first constraint condition. That is, the specific grid cell 608 may correspond to cells that overlap each other (an overlapping cell), among the cells occupied by the first shortest path and the second shortest path.

When a grid cell that does not satisfy the constraint condition is specified, in the present invention, a process may be performed of updating the cost of the wiring exploration region such that the cost of the specific grid cell that does not satisfy the constraint condition(s) is increased (S570), and of re-exploring the shortest path for wiring the plurality of terminals according to the net list in the cost-updated wiring exploration region (S580, see FIG. 5).

The path exploration unit 170 may update the cost of the wiring exploration region 600 such that the cost of the specific grid cell 608 is increased.

Here, "updating the cost" may be understood as setting the cost of the specific grid cell higher than the costs of other grid cells, so that the specific grid cell corresponding to the overlapping cell is not included in the re-explored shortest path, in the shortest path re-exploration step to be performed after the initial shortest path exploration step. In addition, "increasing the cost" may also be understood as giving a penalty to the specific grid cell.

As illustrated in (d) of FIG. 6, the path exploration unit 170 may update the cost of the specific grid cell 608 specified as a cell that does not satisfy the first constraint condition. For example, the path exploration unit 170 may set the cost of the specific grid cell 608 among the plurality of grid cells 601 to 625 to a higher cost (e.g., "1.5") than those of other grid cells.

In this case, the path exploration unit 170, in order to explore the shortest path that satisfies the first constraint condition in the re-exploration step, may update the cost of some grid cells among the plurality of grid cells 601 to 625, even in addition to the specific grid cell 608. In this case, the cost values of the grid cells 603, 607, 609, 610, 611, 612, 613, 615, 616, and 621 updated in addition to the specific grid cell 608 may be updated to lower cost values (e.g., "1.1") than the cost of the specific grid cell 608. As an example, the some grid cells 603, 607, 609, 610, 611, 612, 613, 615, 616, and 621 updated among the plurality of grid cells 601 to 625, in addition to the specific grid cell 608, may include at least some of the grid cells 603, 611, 612, 613, 616, and 621 occupied by the first shortest path or the grid cells 607, 609, 610, and 615 occupied by the second shortest path.

Meanwhile, the path exploration unit 170 may re-explore a shortest path for wiring a plurality of terminals T1, T2, T3, T4, T5, and T6 in the cost-updated wiring exploration region 600.

More specifically, the path exploration unit 170 may re-explore a shortest path for wiring the plurality of terminals T1, T2, T3, T4, T5, and T6 in the cost-updated wiring exploration region 600, according to the net list 210.

In the re-exploration step, the path exploration unit 170 may re-explore the first shortest path of the first net and the second shortest path of the second net, so as to avoid the specific grid cell 608 in which the cost has been increased by the cost update.

As illustrated in (e) of FIG. 6, the path exploration unit 170 may re-explore a shortest path for wiring the first terminal T1 and the second terminal T2 grouped into the first net, so as to avoid the specific grid cell 608 in which the cost is set high. In this case, the path exploration unit 170 may re-explore the first shortest path for wiring the first terminal T1 and the second terminal T2 in consideration of the first constraint condition.

In addition, the path exploration unit 170 may re-explore a shortest path for wiring the third terminal T3 and the fourth terminal T4 grouped into the second net, so as to avoid the specific grid cell 608 in which the cost is set high. In this case, the path exploration unit 170 may re-explore the second shortest path for wiring the third terminal T3 and the fourth terminal T4 in consideration of the first constraint condition.

Accordingly, the specific grid cell 608 may not be included in the first shortest path and the second shortest path that are re-explored. With reference to (e) of FIG. 6, it can be confirmed that the specific grid cell 608 is not included among the cells 601, 602, 603, 606, 611, 616, and 621 occupied by the re-explored first shortest path and the cells 607, 612, 613, 614, and 615 occupied by the re-explored second shortest path.

Meanwhile, in the present invention, even if a wiring path exploration (or re-exploration) satisfying a specific constraint condition is completed, the wiring path may be explored until other remaining constraint condition in addition to the specific constraint condition are satisfied.

In the present invention, the constraint condition may further include a second constraint condition related to at least one of a spacing distance between lines of each net included in the net list 210 and a line width of each of the nets.

In an embodiment, the second constraint condition may be information that is specified and extracted by the control unit 150, from the constraint condition(s) 230 included in the PCB data 200, the information being related to at least one of a spacing distance between lines of each net included in the net list 210 or a line width of each of the nets.

The path exploration unit 170 may specify a second specific grid cell that does not satisfy the second constraint condition, in a state in which a cost of a first specific grid cell specified according to the first constraint condition has been updated.

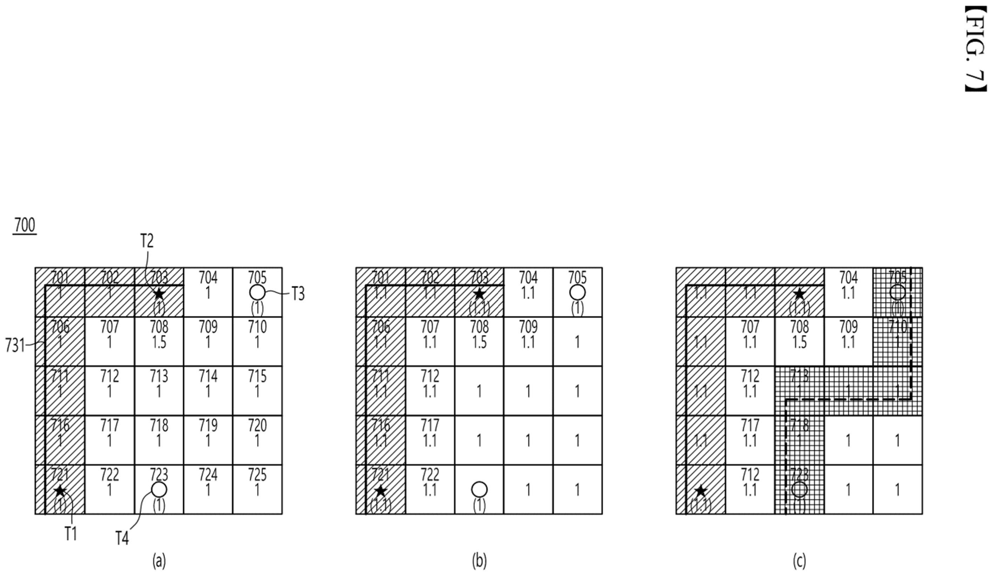

For example, as illustrated in (a) of FIG. 7, a cost of a specific grid cell 708 related to wiring crossing (or conflict) among a plurality of grid cells 701 to 725 of a wiring exploration region 700 may be set higher than costs of other grid cells. Such a specific grid cell 708 may be understood as a first specific grid cell 708 specified according to the first constraint condition. In this case, the first specific grid cell 708 may be specified as one or plurality, depending on the number of overlapping cells, based on the first constraint condition.

More specifically, the path exploration unit 170 may specify a second specific grid cell related to at least one of a spacing distance between lines of each net or a line width of each of the nets, in a state in which the cost of the first specific grid cell 708 specified according to the first constraint condition has been updated.

In this case, the path exploration unit 170 may specify one of the re-explored first shortest path or the re-explored second shortest path as a final wiring. For example, as illustrated in (a) of FIG. 7, the path exploration unit 170 may specify a first wiring 731 that connects the first terminal T1 and the second terminal T2 belonging to the first net as a final wiring. The first wiring 731 may be understood as a wiring that connects the first terminal T1 and the second terminal T2 according to the re-explored first shortest path.

In addition, the path exploration unit 170 may specify (or determine) a grid cell neighboring the shortest path specified as the final wiring, among the plurality of grid cells 701 to 725, as a second specific grid cell that does not satisfy the second constraint condition. For example, as illustrated in (b) of FIG. 7, after specifying the first shortest path as the final wiring, based on the second constraint condition, the path exploration unit 170 may specify grid cells 704, 707, 709, 712, 717, and 722, which are neighboring the grid cells 701, 702, 703, 706, 711, 716, and 721 occupied by the first shortest path specified as the final wiring, as second specific grid cells that do not satisfy the second constraint condition.

Because the line width of the first net specified as the final wiring and the spacing distance between lines need to be considered, the grid cells 704, 707, 709, 712, 717, and 722 specified as the second specific grid cells may be specified as grid cells neighboring the grid cells 701, 702, 703, 706, 711, 716, and 721 occupied by the first net.

Further, the path exploration unit 170 may additionally increase the cost of the second specific grid cells in a state in which the cost of the first specific grid cell 708 is increased (or updated). Here, increasing the cost may be understood as setting the cost of the second specific grid cells 704, 707, 709, 712, 717, and 722 higher than the costs of other grid cells, such that not only the first specific grid cell 708, which does not satisfy the first constraint condition, but also the second specific grid cells 704, 707, 709, 712, 717, and 722, which do not satisfy the second constraint condition, are not included in the re-explored shortest path.

As illustrated in (b) of FIG. 7, the path exploration unit 170 may set the cost of the second specific grid cells 704, 707, 709, 712, 717, and 722, which do not satisfy the second constraint condition, to a higher cost (e.g., "1.1") than those of other grid cells, among the plurality of grid cells 701 to 725.

Meanwhile, in the wiring exploration region 700 where the costs of the first specific grid cell 708 and the second specific grid cells 704, 707, 709, 712, 717, and 722 are updated, the path exploration unit 170 may re-explore the shortest path of another net, not the shortest path of the net specified as the final wiring.

More specifically, the path exploration unit 170 may re-explore the second shortest path of the second net, not the first shortest path of the first net specified as the final wiring, based on the increased costs of the first specific grid cell 708 and the second specific grid cells 704, 707, 709, 712, 717, and 722.

As illustrated in (c) of FIG. 7, the path exploration unit 170 may re-explore a shortest path for wiring the third terminal T3 and the fourth terminal T4, grouped into the second net, so as to avoid the first specific grid cell 708 and the second specific grid cells 704, 707, 709, 712, 717, and 722 whose costs are increased. In this case, the path exploration unit 170 may re-explore the second shortest path for wiring the third terminal T3 and the fourth terminal T4 by considering both the first constraint condition and the second constraint condition.

Accordingly, in the re-explored second shortest path, the first specific grid cell 708 and the second specific grid cells 704, 707, 709, 712, 717, and 722 may not be included. With reference to (c) of FIG. 7, among the cells 705, 710, 713, 714, 715, 718, and 723 occupied by the re-explored second shortest path, it can be confirmed that the first specific grid cell 708 and the second specific grid cells 704, 707, 709, 712, 717, and 722 are not included.

Meanwhile, in the present invention, the constraint condition(s) may further include a third constraint condition related to a wiring forbidden zone in which wiring is restricted in the wiring exploration region.

In an embodiment, the third constraint condition may be information extracted, by the control unit 150, by specifying information related to a wiring forbidden zone in which wiring is restricted in the wiring exploration region, from the constraint condition(s) 230 included in the PCB data 200.

The path exploration unit 170, in a state where the costs of the first specific grid cell 708 and the second specific grid cells 704, 707, 709, 712, 717, and 722 are updated according to the first constraint condition and the second constraint condition, may specify a third specific grid cell that does not satisfy the third constraint condition.

More specifically, the path exploration unit 170 may specify the third specific grid cell related to a wiring forbidden zone in which wiring is restricted, in a state where the costs of the first specific grid cell 708 specified according to the first constraint condition and the second specific grid cells 704, 707, 709, 712, 717, and 722 specified according to the second constraint condition are updated.

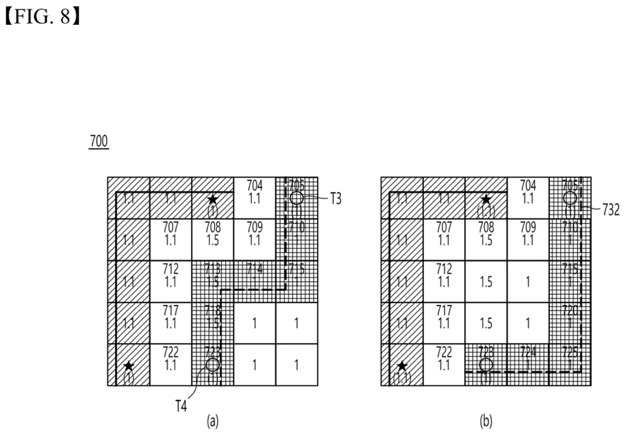

For example, as illustrated in (a) of FIG. 8, the path exploration unit 170 may specify grid cells 713 and 718, which are related to a wiring detection zone among the plurality of grid cells 701 to 725, as third specific grid cells not satisfying the third constraint condition, based on the position information of the wiring forbidden zone included in the PCB data 200.

Further, the path exploration unit 170 may further increase the cost of the third specific grid cells 713 and 718 in a state where the cost of the first specific grid cell 708 and the second specific grid cells 704, 707, 709, 712, 717, 722 is increased. Here, increasing the cost may be understood as setting the cost of the third specific grid cells 713 and 718 to be higher than the costs of other grid cells, so that the third specific grid cells 713 and 718 that do not satisfy the third constraint condition, as well as the first specific grid cell 708 and the second specific grid cells 704, 707, 709, 712, 717, and 722, which do not satisfy the first and second constraint conditions, are not included in the re-explored shortest path.

As illustrated in (a) of FIG. 8, the path exploration unit 170 may set the cost of the third specific grid cells 713 and 718, which do not satisfy the third constraint condition, among the plurality of grid cells 701 to 725, to be higher than those of other grid cells (e.g., "1.5").

Further, the path exploration unit 170 may re-explore a shortest path of another net, not the shortest path of the net specified as a final wiring, in the wiring exploration region 700 where the costs of the first specific grid cell 708, the second specific grid cells 704, 707, 709, 712, 717, and 722, and the third specific grid cells 713 and 718 are updated.

More specifically, the path exploration unit 170 may re-explore the second shortest path of the second net, which is not the first shortest path of the first net specified as the final wiring, based on the increased costs of the first specific grid cell 708, the second specific grid cells 704, 707, 709, 712, 717, and 722, and the third specific grid cells 713 and 718.

As illustrated in (b) of FIG. 8, the path exploration unit 170 may re-explore a shortest path for wiring the third terminal T3 and the fourth terminal T4, grouped into the second net, so as to avoid the first specific grid cell 708, the second specific grid cells 704, 707, 709, 712, 717, and 722, and the third specific grid cells 713 and 718, whose costs are increased. In this case, the path exploration unit 170 may re-explore the second shortest path for wiring the third terminal T3 and the fourth terminal T4, by considering all of the first constraint condition, the second constraint condition, and the third constraint condition.

Accordingly, in the re-explored second shortest path, the first specific grid cell 708, the second specific grid cells 704, 707, 709, 712, 717, and 722, and the third specific grid cells 713 and 718 may not be included. With reference to (b) of FIG. 8, it can be confirmed that among the cells 705, 710, 715, 720, 723, 724, and 725 occupied by the re-explored second shortest path, the first specific grid cell 708, the second specific grid cells 704, 707, 709, 712, 717, and 722, and the third specific grid cells 713 and 718 are not included.

The path exploration unit 170 may specify the second shortest path as the final wiring. For example, as illustrated in (b) of FIG. 8, the path exploration unit 170 may specify a second wiring 732, which connects the third terminal T3 and the fourth terminal T4 belonging to the second net, as the final wiring. The second wiring 732 may be understood as a wiring that connects the third terminal T3 and the fourth terminal T4 according to the re-explored second shortest path.

Meanwhile, as described above, in the present invention, the constraint conditions may include at least one of i) the first constraint condition that prevents lines of a plurality of terminals according to a net list from crossing each other, ii) the second constraint condition related to at least one of a spacing distance between lines of respective nets included in the net list and a line width of each of the nets, or iii) the third constraint condition related to a wiring forbidden zone where wiring is restricted in a wiring exploration region.

In the process of specifying a grid cell that does not satisfy a constraint condition(s) in the present invention, at least one specific grid cell that does not satisfy at least one of the first constraint condition, the second constraint condition, or the third constraint condition among a plurality of grid cells may be specified.

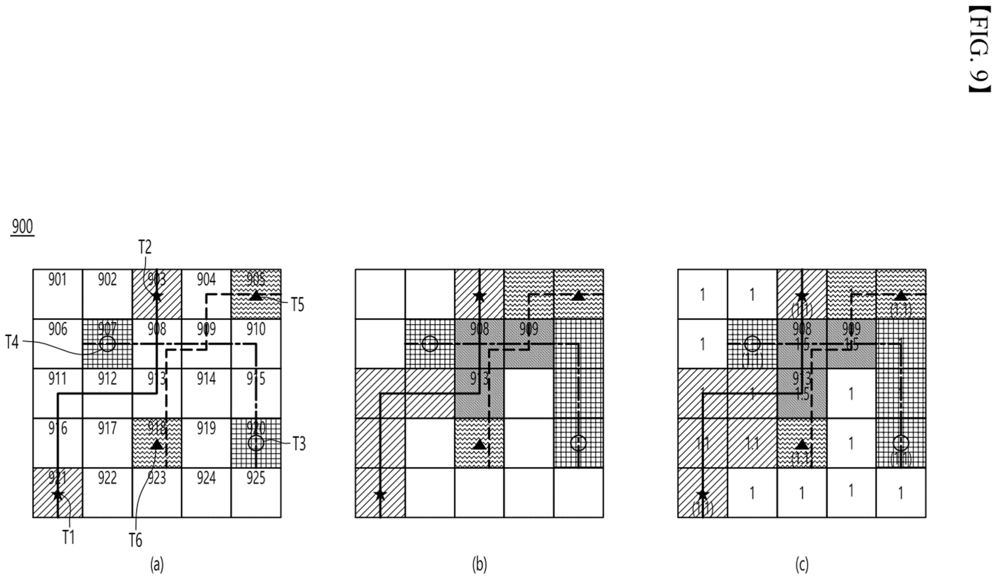

In an embodiment, it is assumed that in the present invention, among a plurality of constraint conditions, the first constraint condition is set to have the highest priority order (first priority), and the third constraint condition (second priority) and the second constraint condition (third priority) are set to have the next highest priority orders. As illustrated in (a) and (b) of FIG. 9, the path exploration unit 170 may specify the first specific grid cells 908 and 909, which do not satisfy the first constraint condition, with the highest priority among a plurality of grid cells 901 to 925 in a wiring exploration region 900, according to a preset priority order.

Further, when the specification of the first specific grid cells 908 and 909 is completed, the path exploration unit 170 may sequentially specify cells according to remaining constraint conditions. For example, as illustrated in (b) of FIG. 9, the path exploration unit 170, after preferentially specifying the first specific grid cells 908 and 909 which do not satisfy the first constraint condition, may specify a third specific grid cell 913, which does not satisfy the third constraint condition, among the plurality of grid cells 901 to 925 in the wiring exploration region 900, according to the third constraint condition, which has the next highest priority order after the first constraint condition.

Since the process of shortest path exploration has been described in more detail above, the following description will be made briefly in order to avoid redundancy of explanation.

Further, the path exploration unit 170 may update the cost of the wiring exploration region 900, so that the cost of a specific grid cell that does not satisfy a constraint condition(s) is increased. For example, as illustrated in (c) of FIG. 9, the path exploration unit 170 may update the cost of the wiring exploration region 900, so that the costs of the first specific grid cells 908 and 909, which do not satisfy the first constraint condition, and the third specific grid cell 913, which does not satisfy the third constraint condition, are increased (e.g., increased to "1.5").

Finally, the path exploration unit 170 may re-explore shortest paths for wiring the plurality of terminals T1, T2, T3, T4, T5, and T6 according to the net list, in the cost-updated wiring exploration region 900, and may specify the re-explored shortest paths as final lines.

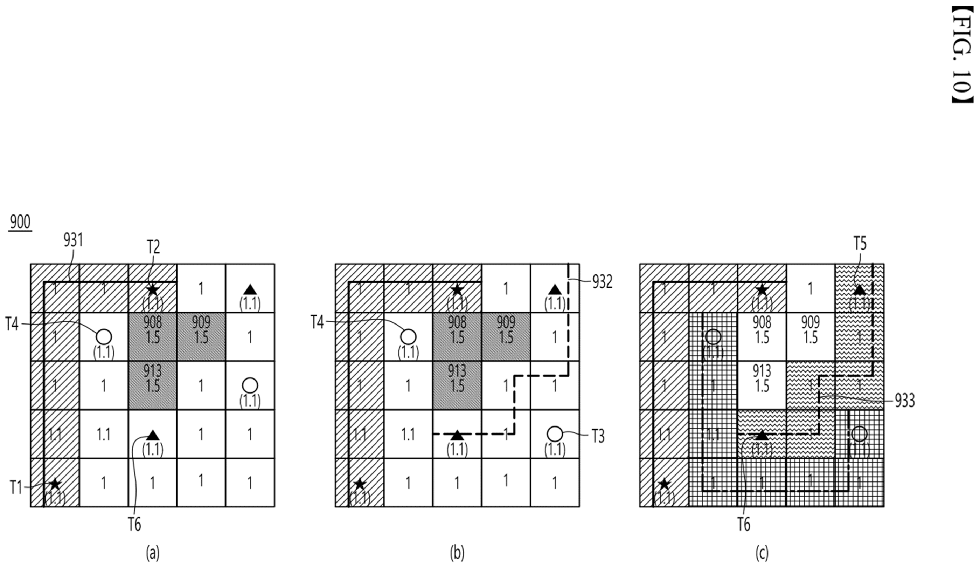

As illustrated in (a) to (c) of FIG. 10, the path exploration unit 170 may re-explore shortest paths for wiring the first terminal T1 and the second terminal T2 grouped into the first net, the third terminal T3 and the fourth terminal T4 grouped into the second net, and the fifth terminal T5 and the sixth terminal T6 grouped into the third net. For example, the path exploration unit 170 may re-explore a first shortest path for wiring the first terminal T1 and the second terminal T2, a second shortest path for wiring the third terminal T3 and the fourth terminal T4, and a third shortest path for wiring the fifth terminal T5 and the sixth terminal T6, so as to avoid the first specific grid cells 908 and 909 and the third specific grid cell 913, whose costs are set high. Further, the path exploration unit 170 may specify a first wiring 931 that connects the first terminal T1 and the second terminal T2 according to the re-explored first shortest path, may specify a second wiring 932 that connects the third terminal T3 and the fourth terminal T4 according to the second shortest path, and may specify a third wiring 933 that connects the fifth terminal T5 and the sixth terminal T6 according to the third shortest path.

As such, in the present invention, by repeatedly exploring wiring paths until all constraint conditions are satisfied, it may be possible to derive (or extract, generate, etc.) an optimal wiring path that satisfies various constraint conditions required for PCB wiring.

Meanwhile, when a PCB defined by the PCB data 200 is composed of a plurality of layers, a wiring exploration region may be formed of a plurality of wiring exploration regions. In this case, the PCB data 200 may include position information about in which wiring exploration region among the plurality of wiring exploration regions each net needs to be positioned.

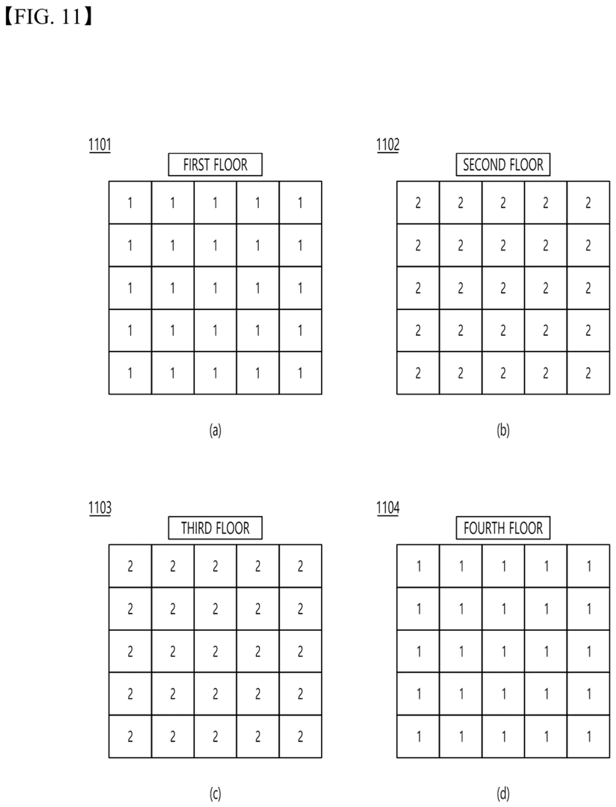

The control unit 150 may perform gridization of the plurality of wiring exploration regions into a plurality of grid cells, based on a preset criterion. For example, as illustrated in (a) to (d) of FIG. 11, the control unit 150 may perform gridization of each of the plurality of wiring exploration regions 1101, 1102, 1103, and 1104 into a plurality of grid cells.

Further, when a specific net needs to be wired in a specific layer among a plurality of layers, the path exploration unit 170 may increase the cost of the remaining layers, excluding the specific layer, in order to induce wiring to be performed in the specific layer rather than in other layers.

More specifically, to allow for wiring at a specific layer that requires wiring for a specific net, the path exploration unit 170 may set the cost of wiring detection regions corresponding to the remaining layers, excluding the wiring detection region corresponding to that specific layer to be high.

When disposing a plurality of terminals in each of the plurality of wiring exploration regions 1101, 1102, 1103, and 1104, the path exploration unit 170 may increase the cost of at least one of the plurality of wiring exploration regions 1101, 1102, 1103, and 1104, based on position information of terminals grouped into respective nets.

Here, increasing the cost of a wiring exploration region may mean that, in a state where the same cost is given to each of the plurality of grid cells included in each of the plurality of wiring exploration regions, when a specific net (e.g., a first net) defined by a net list needs to be positioned in a specific wiring exploration region (e.g., a first wiring exploration region) among the plurality of wiring exploration regions, the cost of grid cells included in the remaining wiring exploration regions (e.g., a second wiring exploration region and a third wiring exploration region) may be increased so that the specific net is not disposed in the remaining wiring exploration regions, excluding the first wiring exploration region among the plurality of wiring exploration regions. For example, as illustrated in (a) to (c) of FIG. 11, the path exploration unit 170 may update the costs of all of the plurality of grid cells included in a second wiring exploration region 1102 and a third wiring exploration region 1103 so that a first net is not disposed in the remaining wiring exploration regions (the second wiring exploration region 1102 and the third wiring exploration region 1103), excluding a first wiring exploration region 1101 (e.g., updated to "2").

In addition, when a plurality of nets (e.g., the first net and the second net) need to be positioned (or disposed) respectively in the first wiring exploration region 1101 and a fourth wiring exploration region 1104 among the plurality of wiring exploration regions 1101, 1102, 1103, and 1104, the path exploration unit 170 may increase the costs of all grid cells included in the remaining wiring exploration regions 1102 and 1103 so that, among the plurality of wiring exploration regions 1101, 1102, 1103, 1104, the first net and the second net are not disposed in the remaining wiring exploration regions (i.e., the second and third wiring exploration regions 1102 and 1103), excluding the first wiring exploration region 1101 and the fourth wiring exploration region 1104 (e.g., increased to "2").

In an embodiment, it is assumed that, based on the net list 210, the first net needs to be positioned in the first wiring exploration region 1101, and the second net needs to be positioned in the fourth wiring exploration region 1104. The path exploration unit 170 may increase the costs of all grid cells included in the remaining wiring exploration regions 1102 and 1103 so that the first terminal T1 and the second terminal T2 grouped into the first net are not disposed in the remaining wiring exploration regions (i.e., the second and third wiring exploration regions 1102, 1103) other than the first wiring exploration region 1101 (e.g., increased to "2").

In another embodiment, the path exploration unit 170 may increase the costs of all grid cells included in the remaining wiring exploration regions 1102 and 1103 so that the third terminal T3 and the fourth terminal T4 grouped into the second net are not disposed in the remaining wiring exploration regions (i.e., the second and third wiring exploration regions 1102, 1103) other than the fourth wiring exploration region 1104 (e.g., increased to "2").

Further, in a state where the cost of the remaining wiring exploration regions 1102 and 1103 is increased, the path exploration unit 170 may dispose each of the plurality of terminals T1, T2, T3, T4, T5, and T6 in at least some of the plurality of grid cells, based on the PCB data 200. For example, the path exploration unit 170 may dispose the first terminal T1 and the second terminal T2 grouped into the first net in the first wiring exploration region 1101, and may dispose the third terminal T3 and the fourth terminal T4 grouped into the second net in the fourth wiring exploration region 1104.

As such, in the present invention, when performing wiring for a PCB composed of a plurality of layers, wiring may be efficiently designed by configuring a signal wiring or forbidden region for each wiring layer through cost adjustment. That is, in the present invention, by effectively reflecting wiring constraints required for PCB design through cost setting, signal interference may be reduced and a design rule may be satisfied in multi-layer PCB design.

Meanwhile, the control unit 150 may derive a solution explored by the path exploration unit 170, by using the solution derivation unit 180.

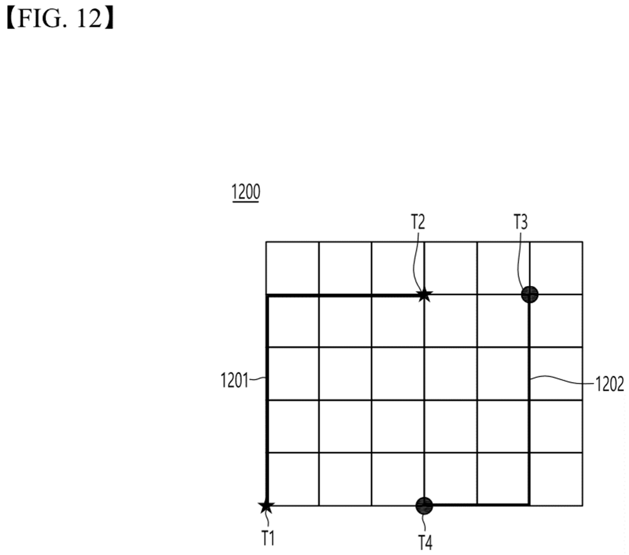

The solution derivation unit 180 may derive, as a solution, a wiring result for a plurality of terminals according to a shortest path explored by the path exploration unit 170. For example, as illustrated in FIG. 12, the solution derivation unit 180 may derive a solution (or a first solution 1200) including a first wiring 1201 connecting the first terminal T1 and the second terminal T2 according to the first shortest path, and a second wiring 1202 connecting the third terminal T3 and the fourth terminal T4 according to the second shortest path.

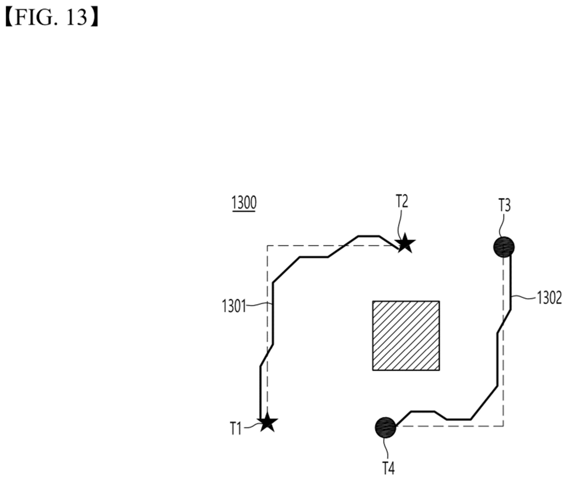

Further, the control unit 150 may explore an optimal (or optimized) wiring path that satisfies all preset constraint conditions (e.g., line width, line spacing, wiring forbidden region, 45-degree wiring, etc.), with shortest paths (or wiring paths) for a plurality of terminals explored by the path exploration unit 170 as a guide (S430, see FIG. 4). Further, the solution derivation unit 180 may derive the explored optimal wiring path as a final solution (S440, see FIG. 4). For example, as illustrated in FIG. 13, the solution derivation unit 180 may derive a solution (or a second solution 1300) including a first wiring 1301 connecting the first terminal T1 and the second terminal T2, and a second wiring 1302 connecting the third terminal T3 and the fourth terminal T4, while satisfying all preset constraint conditions.

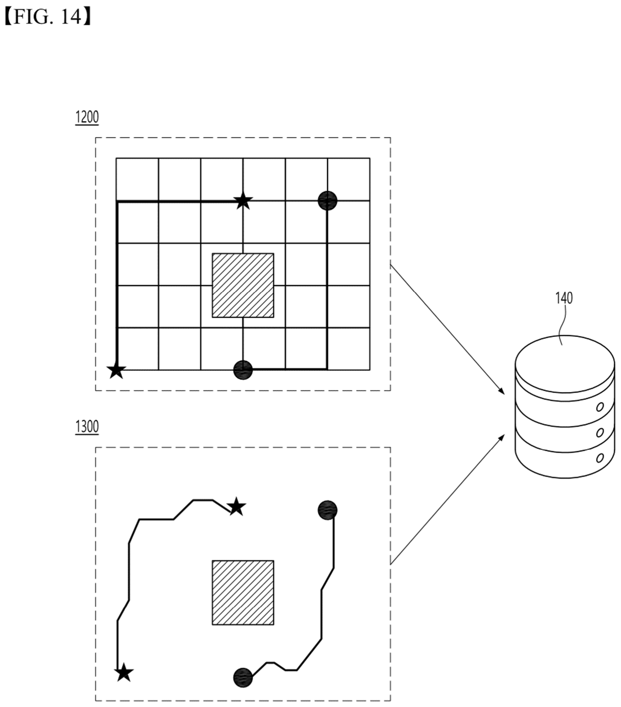

Furthermore, as illustrated in FIG. 14, the control unit 150 may store in the storage unit 140 the first solution 1200 derived based on a shortest path explored by the path exploration unit 170, and the second solution 1300 derived based on exploration results explored by the path exploration unit 170. As an example, a space where solutions are stored in the storage unit 140 may also be referred to as a solution pool. In the present invention, all paths (or solutions) explored (or discovered) in the path exploration process are stored in the storage unit 140, and when a path that does not satisfy a constraint condition(s) is explored during a subsequent path exploration, at least one alternative path may be used to satisfy the constraint condition(s), using at least one path stored in the storage unit 140.

As described above, according to the method and system for grid-based wiring according to the present invention, by automating the PCB design process using artificial intelligence, it may be possible to minimize the time consumed in the PCB design process, and to enable reduction of human resources and costs incurred in the PCB design process.

In addition, according to the method and system for grid-based wiring according to the present invention, an efficient wiring path satisfying various constraint conditions may be derived by exploring the wiring path of the PCB, using artificial intelligence. Through this, in the present invention, the efficiency, accuracy, and quality of PCB wiring design can be improved simultaneously, and a user can reduce the time and cost incurred to design PCB wiring.

Further, according to the method and system for grid-based wiring according to the present invention, by performing PCB automatic wiring satisfying various constraint conditions required for PCB wiring, using artificial intelligence, the productivity and quality of the entire PCB wiring design process may be improved. That is, the present invention may be flexibly applied and used even in a complex PCB wiring design environment.

In addition, according to the method and system for grid-based wiring according to the present invention, by exploring an efficient PCB wiring path based on a grid, it is possible to derive an optimized wiring path that satisfies complex constraint conditions while minimizing wiring conflicts (or congestion, interference, etc.).

Further, according to the method and system for grid-based wiring according to the present invention, it is possible to explore a wiring path based on a grid and provide an optimized solution to a user based on the explored result. Through this, a user can rid himself of repetitive wiring path adjustment task and maximize the efficiency in the design process.

As such, in the present invention, by performing grid-based exploration to find an optimal path from a start point (terminal) to a target point (terminal), processes such as wiring optimization, path exploration, constraint condition reflection, and the like may be performed efficiently and systematically. The present invention may be applied to the design of various electronic devices, and may be efficiently used in the overall industrial field, and can reduce the cost required in the PCB wiring design process, and minimize the design time and human resources.

Meanwhile, the present invention as described above may be executed by one or more processes on a computer and may be implemented as a program storable on a computer-readable medium (or recording medium).

Further, the present invention described above may be implemented as computer-readable code or instructions on a medium in which a program is recorded. That is, the present invention may be provided in the form of a program.

Meanwhile, the computer-readable medium includes all kinds of recording devices for storing data readable by a computer system. Examples of computer-readable media include hard disk drives (HDDs), solid state disks (SSDs), silicon disk drives (SDDs), ROMs, RAMs, CD-ROMs, magnetic tapes, floppy discs, optical data storage devices, and the like.

Further, the computer-readable medium may be a server or cloud storage that includes storage and that the electronic device can access through communication. In this case, the computer may download the program according to the present invention from the server or cloud storage, through wired or wireless communication.

A computer program may reach the system 100 through various suitable delivery mechanisms. The delivery mechanism may be, for example, a computer-readable storage medium, a computer program product, a memory device, a recording medium such as a CD-ROM or DVD, or a product that tangibly implements a computer program. The delivery mechanism may be a signal configured to reliably transmit a computer program through air or an electrical connection. The system 100 may propagate or transmit the computer program as a computer data signal.

Further, references to "computer-readable storage medium", "computer program product", "tangibly embodied computer program", etc. or "controller", "computer", "processor", etc., should be understood to also include computers having various architectures such as single/multi-processor architecture, and sequential (Von Neumann)/parallel architecture, as well as specialized circuits such as field-programmable gate array (FPGA), application specific circuit (ASIC), signal processing devices, and other devices. References to a computer program, instructions, codes, etc., should be understood to include software for programmable processors or firmware, such as programmable content of a hardware device, whether it is instructions for a processor, or configuration settings for a fixedfunction device, a gate array, or a programmable logic device.

Further, in the present invention, the computer described above is an electronic device equipped with a processor, that is, a central processing unit (CPU), and is not particularly limited to any type.

Meanwhile, it should be appreciated that the detailed description is interpreted as being illustrative in every sense, not restrictive. The scope of the present invention should be determined on the basis of the reasonable interpretation of the appended claims, and all of the alterations within the equivalent scope of the present invention belong to the scope of the present invention.

## Claims

1. A grid-based wiring method for a grid-based wiring system comprising at least one processor and at least one memory including a computer program code, the grid-based wiring method, performed by cooperation among the computer program code, the memory, and the processor, comprising:
receiving printed circuit board (PCB) data including a net list and information on a plurality of terminals;
specifying a wiring exploration region for performing wiring of the plurality of terminals based on the net list;
performing gridization of the wiring exploration region into a plurality of grid cells based on a preset criterion;
disposing the plurality of terminals respectively in at least some of the plurality of grid cells, based on the PCB data;
exploring a shortest path for wiring the plurality of terminals according to the net list, in a state where the plurality of terminals are disposed in the wiring exploration region;
based on a result of wiring the plurality of terminals according to the shortest path, specifying a grid cell that does not satisfy a preset constraint condition, among the plurality of grid cells;
updating a cost of the wiring exploration region such that a cost of a specific grid cell that does not satisfy the constraint condition is increased; and
re-exploring a shortest path for wiring the plurality of terminals according to the net list in the cost-updated wiring exploration region.

2. The grid-based wiring method of claim 1, wherein the plurality of terminals respectively correspond to electrical contact points where wiring starts or ends on a PCB defined by the PCB data, and
wherein the net list includes net group information in which terminals that need to be electrically connected among the plurality of terminals are grouped into respective nets.

3. The grid-based wiring method of claim 2, wherein in the exploring of the shortest path, a first shortest path for wiring terminals grouped into a first net defined by the net list, at a minimum cost, and a second shortest path for wiring terminals grouped into a second net different from the first net and defined by the net list, at minimum cost, are explored.

4. The grid-based wiring method of claim 3, wherein in the exploring of the shortest path, the first shortest path and second shortest path having a lowest cost are explored independently of the constraint condition, in a state where the same cost is given to each of the plurality of grid cells in the wiring exploration region.

5. The grid-based wiring method of claim 4, wherein the constraint condition comprises a first constraint condition that prevents wiring of the plurality of terminals according to the net list from crossing each other.

6. The grid-based wiring method of claim 5, wherein in the specifying of the grid cell that does not satisfy the constraint condition, among the cells occupied by the first shortest path and the cells occupied by the second shortest path, an overlapping cell is specified as a specific grid cell that does not satisfy the constraint condition.

7. The grid-based wiring method of claim 6, wherein in the updating of the cost, based on the first constraint condition, during a shortest path re-exploration process of the first net and the second net, the cost of the specific grid cell, which is the overlapping cell, is set higher than costs of other grid cells among the plurality of grid cells, so that the specific grid cell is not included in the re-explored shortest path.

8. The grid-based wiring method of claim 7, wherein in the re-exploring of the shortest path, the first shortest path of the first net and the second shortest path of the second net are configured to be re-explored so as to avoid the specific grid cell with increased cost, and
wherein the re-explored first shortest path and the re-explored second shortest path do not include the specific grid cell.

9. The grid-based wiring method of claim 8, wherein the constraint condition further comprise a second constraint condition related to at least one of a spacing distance between lines of each net included in the net list or a line width of each of the nets.

10. The grid-based wiring method of claim 9, wherein the specifying of a grid cell that does not satisfy the constraint condition further comprise:
specifying a second specific grid cell that does not satisfy the second constraint condition in a state where a cost of a first specific grid cell specified according to the first constraint condition has been updated, and
wherein in the updating of the cost, a cost of the second specific grid cell is further increased in a state where the cost of the first specific grid cell has been increased.

11. The grid-based wiring method of claim 10, wherein in the specifying of a grid cell that does not satisfy the constraint condition, after specifying one of the re-explored first shortest path and the re-explored second shortest path as a final wiring, a grid cell neighboring the shortest path specified as the final wiring among the plurality of grid cells is specified as the second specific grid cell that does not satisfy the second constraint condition.

12. The grid-based wiring method of claim 11, wherein in the re-exploring of the shortest path, among the re-explored first shortest path and the re-explored second shortest path, a shortest path other than the shortest path specified as the final wiring is re-explored based on the increased costs of the first specific grid cell and the second specific grid cell.

13. The grid-based wiring method of claim 9, wherein the constraint condition further comprises a third constraint condition related to a wiring forbidden zone in which wiring is restricted in the wiring exploration region.

14. The grid-based wiring method of claim 4, wherein the constraint condition comprises at least one of:
a first constraint condition that prevents wiring of the plurality of terminals according to the net list from crossing each other;
a second constraint condition related to at least one of a spacing distance between lines of respective nets included in the net list or a line width of each of the nets; or
a third constraint condition related to a wiring forbidden zone in which wiring is restricted in the wiring exploration region, and
wherein the specifying of a grid cell that does not satisfy the constraint condition comprises:
specifying at least one specific grid cell that does not satisfy at least one of the first constraint condition, the second constraint condition, or the third constraint condition among the plurality of grid cells.

15. The grid-based wiring method of claim 14, wherein in the specifying of a grid cell that does not satisfy the constraint condition, a grid cell according to one of constraint conditions, among the first constraint condition, the second constraint condition, and the third constraint condition, is preferentially specified according to a preset priority order, and then grid cells according to remaining constraint conditions are sequentially specified.

16. The grid-based wiring method of claim 2, wherein when the PCB defined by the PCB data is composed of a plurality of layers, the wiring exploration region is formed of a plurality of wiring exploration regions,
wherein the PCB data comprises position information on which of the plurality of wiring exploration regions each net is to be positioned, and
wherein the disposing of each of the plurality of terminals comprises:
increasing a cost of at least one of the plurality of wiring exploration regions based on the position information.

17. The grid-based wiring method of claim 16, wherein in the increasing of the cost of at least one of the plurality of wiring exploration regions, when a specific net defined by the net list is to be positioned in a first wiring exploration region among the plurality of wiring exploration regions, costs of grid cells included in remaining wiring exploration regions are all increased such that the specific net is not disposed in the remaining wiring exploration regions, excluding the first wiring exploration region among the plurality of wiring exploration regions.

18. The grid-based wiring method of claim 17, wherein in the disposing of each of the plurality of terminals, the plurality of terminals are respectively disposed in at least some of the plurality of grid cells, based on the PCB data, in a state where the costs of the remaining wiring exploration regions are increased.

19. A grid-based wiring system, comprising:
at least one processor and at least one memory including a computer program code,
wherein the memory and the program code cooperate with the processor to:
receive printed circuit board (PCB) data including a net list and information on a plurality of terminals;
specify a wiring exploration region for performing wiring for the plurality of terminals based on the net list;
perform gridization of the wiring exploration region into a plurality of grid cells based on a preset criterion;
dispose the plurality of terminals respectively in at least some of the plurality of grid cells based on the PCB data;
explore a shortest path for wiring the plurality of terminals according to the net list with the plurality of terminals disposed in the wiring exploration region;
based on a result of wiring the plurality of terminals corresponding to the shortest path, specify a grid cell that does not satisfy a preset constraint condition among the plurality of grid cells;
update a cost of the wiring exploration region such that a cost of a specific grid cell that does not satisfy the constraint condition is increased; and
re-explore a shortest path for wiring the plurality of terminals according to the net list in the cost-updated wiring exploration region.

20. A program stored in a computer-readable recording medium and executed by one or more processes in an electronic device, the program comprising instructions to perform:
receiving printed circuit board (PCB) data including a net list and information on a plurality of terminals;
specifying a wiring exploration region for performing wiring of the plurality of terminals based on the net list;
performing gridization of the wiring exploration region into a plurality of grid cells based on a preset criterion;
disposing the plurality of terminals respectively in at least some of the plurality of grid cells, based on the PCB data;
exploring a shortest path for wiring the plurality of terminals according to the net list, in a state where the plurality of terminals are disposed in the wiring exploration region;
based on a result of wiring the plurality of terminals according to the shortest path, specifying a grid cell that does not satisfy a preset constraint condition, among the plurality of grid cells;
updating a cost of the wiring exploration region such that a cost of a specific grid cell that does not satisfy the constraint condition is increased; and
re-exploring a shortest path for wiring the plurality of terminals according to the net list in the cost-updated wiring exploration region.
